(19) Europäisches Patentamt
European Patent Office
Office européen des brevets

(11) **EP 2 984 973 A1**

(12) **EUROPÄISCHE PATENTANMELDUNG**

(43) Veröffentlichungstag:
**17.02.2016 Patentblatt 2016/07**

(51) Int Cl.:
**A47J 42/00** *(2006.01)* **A47J 42/02** *(2006.01)*

(21) Anmeldenummer: **14405061.4**

(22) Anmeldetag: **12.08.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **JURA ELEKTROAPPARATE AG**
**4626 Niederbuchsiten (CH)**

(72) Erfinder:
• **Sahli, Georg**
**3423 Ersigen (CH)**

• **Probst, Stephan**
**4553 Subingen (CH)**
• **Büttiker, Philipp**
**4625 Oberbuchsiten (CH)**

(74) Vertreter: **EGLI-EUROPEAN PATENT ATTORNEYS**
**Horneggstrasse 4**
**Postfach**
**8034 Zürich (CH)**

(54) **Mahlwerk zum Mahlen von Kaffeebohnen sowie Kaffeemaschine mit einem solchen Mahlwerk**

(57) Es wird ein neues Mahlwerk (1) beschrieben, welches zum Mahlen von Kaffeebohnen (3) dient und als Kegelmahlwerk oder Scheibenmahlwerk ausgebildet ist. Zur Verbesserung des Mahlprozes-ses weisen die Mahl-kegel (11) und Mahlring (15) bzw. erste und zweite Mahl-scheibe (11', 15') Mahlflächen (63, 69, 93, 99) mit einem Neigungswinkel (φ) bezüglich einer Werkzeugbezugse-bene (E-I) auf, der jeweils grösser als 90° und kleiner als 180° ist.

Fig. 6E

EP 2 984 973 A1

**Beschreibung**

Die Erfindung bezieht sich auf ein Mahlwerk, welches zum Mahlen von Kaffee dient, sowie auf eine mit einem solchen Mahlwerk ausgestattete Kaffeemaschine.

Eine Vielzahl von Mahlwerken zum Mahlen von Lebensmitteln, insbesondere Kaffeebohnen, ist an sich bekannt, wobei letztere stets zwischen zwei gegeneinander bewegten Mahlelementen zerbrochen werden. In Abhängigkeit von der Gestaltung der Mahlelemente differenziert man zwischen Kegelmahlwerken und Scheibenmahlwerken.

So sind Kegelmahlwerke insbesondere aus der EP 2 050 375 A1, der DE 195 14 794 A1, der DE 196 38 824 A1 (dort insbesondere Figur 16 und Beschreibung Spalte 9, Zeilen 43 ff.) und der DE 849 600 (dort insbesondere gemäss Figur 2 und Beschreibung Seite 2, Zeilen 38 ff.) bekannt.

Kegelmahlwerke des Standes der Technik weisen allgemein ein erstes Mahlelement auf, welches kegelförmig ausgestaltet ist und daher auch Mahlkegel heisst. Dieser ist drehbar um eine Drehachse gelagert. Koaxial zu dieser Drehachse und im Wesentlichen um die Kegelfläche des Mahlkegels herum ist ein zweites Mahlelement angeordnet, welches als Mahlring bezeichnet wird. Der Mahlring weist an seiner Innenseite, die von dem Mahlkegel unter Ausbildung eines Mahlspaltes beabstandet ist, ebenfalls eine im Wesentlichen kegelförmige Gestalt auf. Sowohl Mahlkegel als auch Mahlring besitzen an ihren einander gegenüberliegenden Seiten spiralförmig angeordnete, durch Zähne gebildete Mahlflächen. Bei Betrieb einer mit einem Kegelmahlwerk ausgestatteten Kaffeemaschine werden die zu mahlenden Kaffeebohnen von einem Eingangsbereich bzw. Eintrittsspalt des Mahlwerkes zu dessen Ausgangsbereich bzw. Austrittsspalt mittels Relativbewegung von Mahlkegel zu Mahlring durch die zwischen den Zähnen ausgebildeten Mahlnuten transportiert. Während dieses Transportes werden die einzelnen Kaffeebohnen gegen die jeweiligen Mahlflächen der Zähne bewegt und durch diese mittels Klemmung zerbrochen. Um das Zerbrechen der Kaffeebohnen zu gewährleisten, ist jede Mahlfläche des Mahlkegels derart angeordnet, dass sie eine der Mahlnuten des Mahlkegels an einer - bezogen auf die Richtung der Relativbewegung des Mahlkegels bezüglich des Mahlrings - "hinteren" Seite der jeweiligen Mahlnut begrenzt. Entsprechend ist jede Mahlfläche des Mahlrings derart angeordnet, dass sie eine der Mahlnuten des Mahlrings an einer - bezogen auf die Richtung der Relativbewegung des Mahlrings bezüglich des Mahlkegels - "hinteren" Seite der jeweiligen Mahlnut begrenzt.

Bei beispielsweise aus der DE 196 38 824 A1 (dort insbesondere Figur 1 und Beschreibung Spalte 7, Zeilen 26 ff.) sowie der DE 38 03 619 C2 bekannten Scheibenmahlwerken sind das erste Mahlelement und das zweite Mahlelement jeweils im Wesentlichen scheibenförmig (als sogenannte Mahlscheiben) ausgebildet.

Die beiden Mahlscheiben (im Folgenden auch "erste Mahlscheibe" und "zweite Mahlscheibe" genannt) sind um eine gemeinsame Drehachse unter Ausbildung eines Mahlspaltes parallel zueinander angeordnet und weisen jeweils an ihren einander gegenüberliegenden Seiten durch Zähne gebildete Mahlflächen auf. Bei Betrieb einer mit einem Scheibenmahlwerk ausgestatteten Kaffeemaschine werden die zu mahlenden Kaffeebohnen von einem Eingangsbereich bzw. Eintrittsspalt des Mahlwerkes zu dessen Ausgangsbereich bzw. Austrittsspalt mittels Relativbewegung der beiden Mahlscheiben durch die zwischen den Zähnen ausgebildeten Mahlnuten transportiert. Während dieses Transportes werden die einzelnen Kaffeebohnen gegen die jeweiligen Mahlflächen der Zähne bewegt und durch diese mittels Klemmung zerbrochen. Um das Zerbrechen der Kaffeebohnen zu gewährleisten, ist jede Mahlfläche der ersten Mahlscheibe derart angeordnet, dass sie eine der Mahlnuten der ersten Mahlscheibe an einer - bezogen auf die Richtung der Relativbewegung der ersten Mahlscheibe bezüglich der zweiten Mahlscheibe - "hinteren" Seite der jeweiligen Mahlnut begrenzt. Entsprechend ist jede Mahlfläche der zweiten Mahlscheibe derart angeordnet, dass sie eine der Mahlnuten der zweiten Mahlscheibe an einer - bezogen auf die Richtung der Relativbewegung der zweiten Mahlscheibe bezüglich der ersten Mahlscheibe - "hinteren" Seite der jeweiligen Mahlnut begrenzt.

Der Mahlgrad, d.h. die Körnung des gemahlenen Kaffeepulvers, kann unter anderem über den Abstand der beiden Mahlelemente zueinander, die Anzahl der Zähne sowie deren Höhe und Neigungswinkel eingestellt werden. Insbesondere kann vorgesehen sein, dass die Anzahl der Zähne vom Eingangsbereich des Mahlwerkes hin zu dessen Ausgangsbereich zunimmt, während die Höhe der jeweiligen Zähne vom Eingangsbereich zu dessen Ausgangsbereich hin abnimmt. In jedem Fall bleibt das bekannte Prinzip des Zerbrechens der Kaffeebohnen erhalten.

Im Folgenden wird die Gestaltung der Zähne bzw. der Mahlflächen bekannter Mahlwerke beispielhaft anhand der Druckschrift DE 196 38 824 A1 (vgl. dort Fig. 16 und Fig. 1) erläutert werden.

Dabei soll zum Zwecke der Vereinfachung und Vereinheitlichung der nachfolgenden Darstellung für Kegelmahlwerke mit zwei Mahlelementen in Form eines Mahlkegels und eines Mahlrings der vorstehend genannten Art (sowohl für Mahlwerke des Standes der Technik als auch für die erfindungsgemässen Mahlwerke) folgende Konvention gelten:

- Punkt P:

    Dies ist ein fiktiver Punkt P auf einer Mahlfläche eines der Mahlelemente des Mahlwerkes, insbesondere auf einer Schneidkante.

- Drehachse R:

Um diese dreht sich mindestens eines der Mahlelemente, und insbesondere der Punkt P, relativ zu dem jeweils anderen Mahlelement auf einer Kreisbahn.

- Drehrichtung M:

    Dies ist die Richtung, um die sich das um die Drehachse R drehende Mahlelement bewegt.

- Mahlrichtung S:

    Diese ist die Bewegungsrichtung des Punkts P bei einer Drehung eines der Mahlelemente in der Drehrichtung M (diese Bewegungsrichtung liegt auf einer Tangente durch den Punkt P an den Kreis, auf dem sich der Punkt P um die Drehachse R relativ zu dem jeweils anderen Mahlelement bewegt). Da sich jedes der Mahlelemente relativ zu dem jeweils anderen Mahlelement bewegt, wirken die beiden Mahlelemente in unterschiedlichen Richtungen auf eine Kaffeebohne ein. Aus diesem Grunde wird im Folgenden gegebenenfalls zwischen einer Mahlrichtung S1 für einen Punkt P auf einem der Mahlelemente und einer Mahlrichtung S2 für einen Punkt P auf dem anderen der Mahlelemente unterschieden.

- Werkzeugbezugsebene E-I:

    Dies ist eine Ebene im Punkt P, welche parallel zur Mahlrichtung S und parallel zur Drehachse R ausgebildet ist.

- Angenommene Arbeitsebene E-II:

    Dies ist eine orthogonal zur Drehachse R und parallel zur Mahlrichtung S ausgerichtete Ebene durch den Punkt P.

- Mahlschneideebene E-III:

    Dies ist eine Ebene durch den Punkt P, die senkrecht auf der Werkzeugbezugsebene E-I und senkrecht zur Mahlrichtung S steht.

- Neigungswinkel φ:

    Dies ist der Winkel zwischen der Mahlfläche und der Werkzeugbezugsebene E-I, gemessen an der angenommenen Arbeitsebene E-II in der Mahlrichtung S. Der Neigungswinkel φ ist positiv, wenn er ausgehend von der Mahlfläche im Gegenuhrzeigersinn in Richtung der Werkzeugbezugsebene E-I bzw. in Richtung der Mahlrichtung S betrachtet wird.

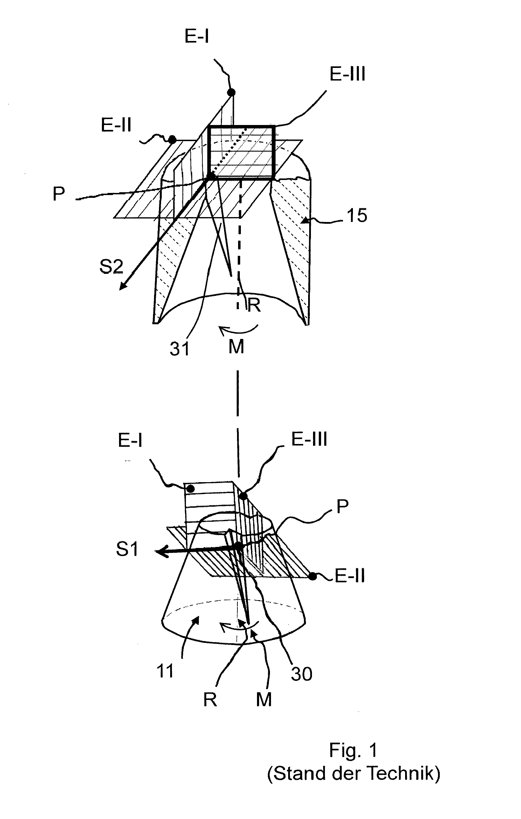

Die aus der 196 38 824 A1 bekannte und ein Kegelmahlwerk zeigende Fig. 16 ist in diesem hier vorliegenden Dokument als Figur 1 widergegeben, wobei der Mahlkegel 11 und der Mahlring 15 separat voneinander (in einer Explosionsdarstellung, in welcher der Mahlring 14 in Richtung der Drehachse R weiter beabstandet sind) dargestellt sind, wobei angenommen ist, dass sich der Mahlkegel 11 relativ zum Mahlring 15 um die in Fig. 1 dargestellte Drehachse R dreht. Die Drehachse R und die Drehrichtung M sind in dieser Figur leicht zu erkennen.

An einem frei gewählten Punkt P auf der Mahlfläche 30 des Mahlkegels 11 sind die Mahlrichtung S1 ebenso wie die Werkzeugbezugsebene E-I, die Arbeitsebene E-II und die Mahlschneideebene E-III eingezeichnet. Auch auf einer Mahlfläche 31 des Mahlrings 15 ist ein Punkt P frei gewählt, an dem die korrespondierende Mahlrichtung S2 ebenso wie die Werkzeugbezugsebene E-I, die Arbeitsebene E-II und die Mahlschneideebene E-III gezeigt sind. Hinsichtlich der Mahlrichtungen S1 und S2 ist zu beachten, dass, wenn der Mahlkegel 11 in der Drehrichtung M um die Drehachse R gedreht wird, der Mahlring 15 relativ zum Mahlkegel 11 in einer zur Drehrichtung M entgegengesetzten Drehrichtung dreht. Die Mahlrichtung S1 ist demnach in Drehrichtung M und die Mahlrichtung S1 entgegen der Drehrichtung M orientiert.

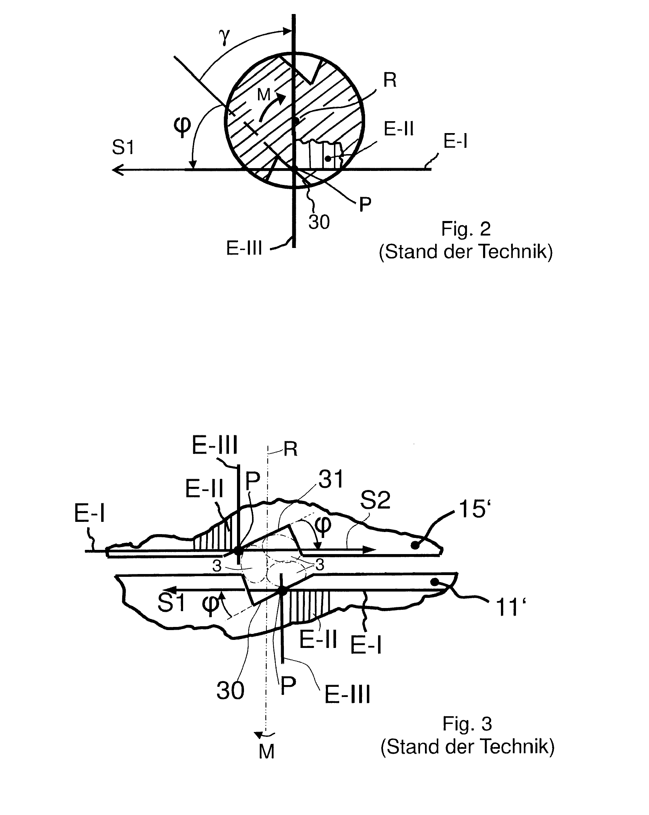

In Figur 2 ist ein Schnitt durch den in Figur 1 unten gezeigten Mahlkegel 11 in Draufsicht zu sehen, wobei die Schnittfläche durch den Punkt P in der angenommenen Arbeitsebene E-II liegt. Der Neigungswinkel φ der Mahlfläche 30, also der Winkel zwischen der Mahlfläche 30 und der Werkzeugbezugsebene E-I, gemessen an der angenommenen Arbeitsebene E-II in der Drehrichtung S1, beträgt weniger als 90°.

Entsprechendes gilt hinsichtlich der Mahlfläche 31 des Mahlrings 15 am Punkt P auf der Mahlfläche 31 gemäss Fig. 1: Der Neigungswinkel der Mahlfläche 31, also der Winkel zwischen der Mahlfläche 31 und der Werkzeugbezugsebene E-I, gemessen an der angenommenen Arbeitsebene E-II in der Drehrichtung S2, beträgt weniger als 90° (in den Figuren nicht dargestellt).

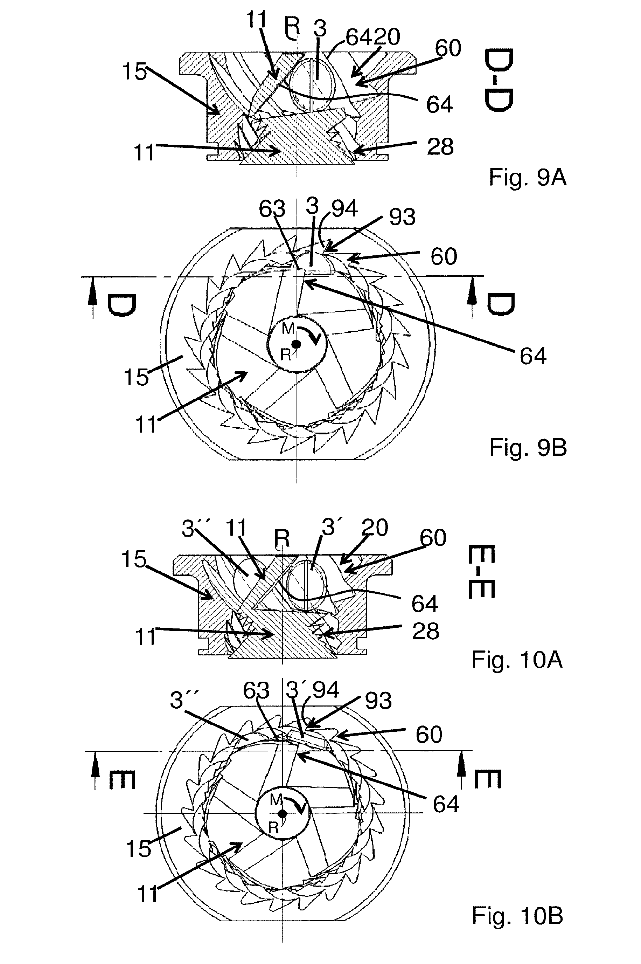

In Figur 3 dieses Dokumentes ist das Scheibenmahlwerk der Figur 10 der DE 196 38 824 A1 gezeigt. Das Scheibenmahlwerk weist wie zuvor erwähnt das erste scheibenförmige Mahlelement 11' (im Folgenden Mahlscheibe 11' genannt) und das zweite scheibenförmige Mahlelement 15' (im Folgenden Mahlscheibe 15' genannt) auf. In dem zwischen den Mahlscheiben 11', 15' ausgebildeten Mahlspalt befinden sich Kaffeebohnen 3. Weiterhin ist angenommen, dass die Mahlscheibe 11' relativ zur Mahlscheibe 15' eine Rotation um die Drehachse R in einer Drehrichtung M ausführt. Die Kaffeebohnen 3 werden bei der Rotation der Mahlscheibe 11'(relativ zur Mahlscheibe 15') um die Drehachse R in Drehrichtung M zwischen einer an der ersten Mahlscheibe 11' ausgebildeten Mahlfläche 30 und einer an der zweiten Mahlscheibe 15' ausgebildeten Mahlfläche 31 geklemmt und zerbrochen. Auch in Figur 3 ist jeweils für die obere Mahlscheibe 15' und die untere Mahlscheibe 11' ein beliebiger Punkt P auf der Mahlfläche 30 bzw. ein beliebiger Punkt P auf der Mahlfläche 31 definiert.

Die beiden Mahlscheiben 11', 15' erstrecken sich im Wesentlichen senkrecht zur Drehachse R. Aus diesem Grund erstrecken sich die Mahlflächen 30 und 31 der Mahlscheiben 11', 15' im Wesentlichen parallel zu einer senkrecht zur Drehachse R angeordneten Ebene.

Zum Zwecke der Vereinfachung und Vereinheitlichung der nachfolgenden Darstellung für Scheibenmahlwerke mit zwei Mahlelementen in Form von Mahlscheiben der vorstehend genannten Art (sowohl für Mahlwerke des Standes der Technik als auch für die erfindungsgemässen Mahlwerke) folgende Konventionen gelten:

- Punkt P:

  Dies ist ein fiktiver Punkt P auf einer Mahlfläche eines der (zwei) Mahlelemente des Mahlwerkes, insbesondere auf einer Schneidkante.

- Drehachse R:

  Um diese dreht sich mindestens eines der Mahlelemente, und insbesondere der Punkt P, relativ zu dem jeweils anderen Mahlelement auf einer Kreisbahn.

- Drehrichtung M:

  Dies ist die Richtung, um die sich das um die Drehachse R drehende Mahlelement (relativ zu dem jeweils anderen Mahlelement) bewegt.

- Mahlrichtung S:

  Diese ist die Bewegungsrichtung des Punkts P bei einer Drehung eines der Mahlelemente in der Drehrichtung M (diese Bewegungsrichtung liegt auf einer Tangente durch den Punkt P an den Kreis, auf dem sich der Punkt P um die Drehachse R relativ zu dem jeweils anderen Mahlelement bewegt). Da sich jedes der Mahlelemente relativ zu dem jeweils anderen Mahlelement bewegt, wirken die beiden Mahlelemente in unterschiedlichen Richtungen auf eine Kaffeebohne ein. Aus diesem Grunde wird im Folgenden gegebenenfalls zwischen einer Mahlrichtung S1 für einen Punkt P auf einem der Mahlelemente und einer Mahlrichtung S2 für einen Punkt P auf dem anderen der Mahlelemente unterschieden.

- Werkzeugbezugsebene E-I:

  Dies ist eine Ebene im Punkt P, welche parallel zur Mahlrichtung S und senkrecht zur Drehachse R ausgebildet ist.

- Angenommene Arbeitsebene E-II:

  Dies ist eine parallel zur Drehachse R und parallel zur Mahlrichtung S ausgerichtete Ebene durch den Punkt P.

- Mahlschneideebene E-III:

  Dies ist eine Ebene durch den Punkt P, die senkrecht auf der Werkzeugbezugsebene E-I und senkrecht zur Mahlrichtung S steht.

- Neigungswinkel $\varphi$:

  Dies ist der Winkel zwischen der Mahlfläche und der Werkzeugbezugsebene E-I, gemessen an der angenommenen Arbeitsebene E-II in der Mahlrichtung S der Mahlfläche. Der Neigungswinkel ist positiv, wenn er ausgehend von der Mahlfläche im Gegenuhrzeigersinn in Richtung der Werkzeugbezugsebene E-I bzw. in Richtung der Mahlrichtung S betrachtet wird.

Ausgehend von der zuvor dargestellten Konventionen für Scheibenmahlwerke sind des Weiteren - jeweils für den in Fig. 3 dargestellten Punkt P auf der Mahlfläche 30 der ersten Mahlscheibe 11' und den in Fig. 3 dargestellten Punkt P auf der Mahlfläche 31 der zweiten Mahlscheibe 15' - die Mahlrichtung S1 für die Mahlfläche 30 der ersten Mahlscheibe 11' und die Mahlrichtung S2 für die Mahlfläche 31 der zweiten Mahlscheibe 15' und die Werkzeugbezugsebenen E-I, die angenommenen Arbeitsebenen E-II und die Mahlschneideebenen E-III eingezeichnet.

Hinsichtlich der Mahlrichtungen S1 bzw. S2 der Mahlflächen 30 bzw. 31 der ersten Mahlscheibe 11' bzw. der zweiten Mahlscheibe 15' ist zu beachten, dass, wenn die erste Mahlscheibe 11' in der Drehrichtung M um die Drehachse R gedreht wird, die zweite Mahlscheibe 15' relativ zur erste Mahlscheibe 11' in einer zur Drehrichtung M entgegengesetzten Drehrichtung dreht. Die Mahlrichtung S1 ist demnach in Drehrichtung M und die Mahlrichtung S1 entgegen der Mahlrichtung M orientiert.

Der Neigungswinkel $\varphi$ für die Mahlfläche 30 und der Werkzeugbezugsebene E-I, gemessen an der angenommenen Arbeitsebene E-II in der Mahlrichtung S1, ist auch in dem hier gezeigten Stand der Technik kleiner als 90°, wie der Figur 3 leicht zu entnehmen ist.

Entsprechend ist der Neigungswinkel $\varphi$ für die Mahlfläche 31 und der Werkzeugbezugsebene E-I, gemessen an der angenommenen Arbeitsebene E-II in der Mahlrichtung S2, auch in dem hier gezeigten Stand der Technik kleiner als 90°, wie der Figur 3 leicht zu entnehmen ist.

Es kann also festgehalten werden, dass Kegelmahlwerke des Standes der Technik folgende Merkmale umfassen:

- einen Mahlkegel, der eine Anzahl von voneinander beabstandeten, durch Mahlnuten voneinander separierten Zähnen besitzt, welche jeweils eine Mahlschneide und eine an die Mahlschneide angrenzende erste Mahlfläche aufweisen,

- einen Mahlring, der eine Anzahl von voneinander beabstandeten, durch Mahlnuten voneinander separierten Zähnen besitzt, welche jeweils eine Mahlschneide (93) und eine an die Mahlschneide angrenzende zweite Mahlfläche aufweisen,

- wobei der Mahlkegel und der Mahlring koaxial entlang einer gemeinsame Drehachse unter Ausbildung eines sich zwischen dem Mahlkegel und Mahlring erstreckenden Mahlspaltes angeordnet sind,

- wobei der Mahlkegel und der Mahlring relativ zueinander um die gemeinsame Drehachse drehbar sind, sodass bei einer Drehung des Mahlkegels relativ zum Mahlring jede erste Mahlfläche des Mahlkegels jeweils in eine Mahlrichtung relativ zum Mahlring bewegt wird, um die zu mahlenden Kaffeebohnen von einem Eintrittsspalt des Mahlwerkes in den Mahlnuten des Mahlkegels und des Mahlrings durch den Mahlspalt zu einem unterhalb des Eintrittsspalts angeordneten Austrittsspalt zu transportieren und mittels der ersten Mahlflächen des Mahlkegels zu zerkleinern, wobei jede erste Mahlfläche derart angeordnet ist, dass sie eine der Mahlnuten des Mahlkegels an einer bezüglich der Mahlrichtung hinteren Seite der jeweiligen Mahlnut begrenzt,

- wobei jede der ersten Mahlflächen des Mahlkegels (11) an einem beliebigen Punkt an der jeweiligen ersten Mahlfläche einen Neigungswinkel φ bezüglich einer Werkzeugbezugsebene, gemessen an einer angenommenen Arbeitsebene in der Mahlrichtung der jeweiligen ersten Mahlfläche, aufweist,

- wobei die Werkzeugbezugsebene eine Ebene in dem beliebigen Punkt ist, welche parallel zur Mahlrichtung und parallel zur gemeinsamen Drehachse ausgebildet ist, und

- wobei die angenommene Arbeitsebene eine orthogonal zur Drehachse und parallel zur Mahlrichtung ausgerichtete Ebene durch den beliebigen Punkt ist.

Weiter kann festgehalten werden, dass Kegelmahlwerke des Standes der Technik folgende Merkmale umfassen:

- einen Mahlkegel, der eine Anzahl von voneinander beabstandeten, durch Mahlnuten voneinander separierten Zähnen besitzt, welche jeweils eine Mahlschneide und eine an die Mahlschneide angrenzende erste Mahlfläche aufweisen,

- einen Mahlring, der eine Anzahl von voneinander beabstandeten, durch Mahlnuten voneinander separierten Zähnen besitzt, welche jeweils eine Mahlschneide und eine an die Mahlschneide angrenzende zweite Mahlfläche aufweisen,

- wobei der Mahlkegel und der Mahlring koaxial entlang einer gemeinsame Drehachse unter Ausbildung eines sich zwischen dem Mahlkegel und dem Mahlring erstreckenden Mahlspaltes angeordnet sind,

- wobei Mahlkegel und der Mahlring relativ zueinander um die gemeinsame Drehachse drehbar sind, sodass bei einer Drehung des Mahlrings relativ zum Mahlkegel jede zweite Mahlfläche des Mahlrings jeweils in eine Mahlrichtung relativ zum Mahlkegel bewegt wird, um die zu mahlenden Kaffeebohnen von einem Eintrittsspalt des Mahlwerkes in den Mahlnuten des Mahlkegels und des Mahlrings durch den Mahlspalt zu einem unterhalb des Eintrittsspalts angeordneten Austrittsspalt zu transportieren und mittels der zweiten Mahlflächen des Mahlrings zu zerkleinern, wobei jede zweite Mahlfläche derart angeordnet ist, dass sie eine der Mahlnuten des Mahlrings an einer bezüglich der Mahlrichtung hinteren Seite der jeweiligen Mahlnut begrenzt,

- wobei jede der zweiten Mahlflächen des Mahlrings an einem beliebigen Punkt an der jeweiligen zweiten Mahlfläche einen Neigungswinkel φ bezüglich einer Werkzeugbezugsebene, gemessen an einer angenommenen Arbeitsebene in der Mahlrichtung der jeweiligen zweiten Mahlfläche, aufweist,

- wobei die Werkzeugbezugsebene eine Ebene in dem beliebigen Punkt ist, welche parallel zur Mahlrichtung und parallel zur Drehachse ausgebildet ist, und

- wobei die angenommene Arbeitsebene eine orthogonal zur Drehachse und parallel zur Mahlrichtung ausgerichtete Ebene durch den beliebigen Punkt ist.

Es kann weiter festgehalten werden, dass Scheibenmahlwerke des Standes der Technik folgende Merkmale aufweisen:

- eine erste Mahlscheibe, die eine Anzahl von voneinander beabstandeten, durch Mahlnuten voneinander separierten Zähnen besitzt, welche jeweils eine Mahlschneide und eine an die Mahlschneide angrenzende erste Mahlfläche aufweisen,

- eine zweite Mahlscheibe, die eine Anzahl von voneinander beabstandeten, durch Mahlnuten voneinander separierten Zähnen besitzt, welche jeweils eine Mahlschneide und eine an die Mahlschneide angrenzende zweite Mahlfläche aufweisen,

- wobei die erste Mahlscheibe und die zweite Mahlscheibe koaxial entlang einer gemeinsamen Drehachse unter Ausbildung eines sich zwischen der ersten Mahlscheibe und der zweiten Mahlscheibe erstreckenden Mahlspaltes angeordnet sind und sich jeweils im Wesentlichen senkrecht zu der gemeinsamen Drehachse erstrecken,

- wobei die erste Mahlscheibe und die zweite Mahlscheibe relativ zueinander um die gemeinsame Drehachse drehbar sind, sodass bei einer Drehung der ersten Mahlscheibe relativ zur zweiten Mahlscheibe jede der ersten Mahlflächen der ersten Mahlscheibe jeweils in eine Mahlrichtung relativ zur zweiten Mahlscheibe bewegt wird, um die zu mahlenden Kaffeebohnen von einem Eintrittsspalt des Mahlwerkes in den Mahlnuten durch den Mahlspalt zu einem Austrittsspalt zu transportieren und mittels der ersten Mahlflächen der ersten Mahlscheibe zu zerkleinern, wobei jede erste Mahlfläche der ersten Mahlscheibe derart angeordnet ist, dass sie einer der Mahlnuten der ersten Mahlscheibe an einer bezüglich der Mahlrichtung hinteren Seite der jeweiligen Mahlnut begrenzt,

- wobei jede erste Mahlfläche der ersten Mahlscheibe an einem beliebigen Punkt an der jeweiligen ersten Mahlfläche einen Neigungswinkel $\varphi$ bezüglich einer Werkzeugbezugsebene, gemessen an einer angenommenen Arbeitsebene in der Mahlrichtung der jeweiligen ersten Mahlfläche, aufweist,

- wobei die Werkzeugbezugsebene eine Ebene in dem beliebigen Punkt ist, welche parallel zur Mahlrichtung und senkrecht zur Drehachse ausgebildet ist, und

- wobei die angenommene Arbeitsebene eine parallel zur Drehachse und parallel zur Mahlrichtung ausgerichtete Ebene durch den beliebigen Punkt ist.

Schliesslich kann festgehalten werden, dass Scheibenmahlwerke des Standes der Technik folgende Merkmale aufweisen:

- eine erste Mahlscheibe, die eine Anzahl von voneinander beabstandeten, durch Mahlnuten voneinander separierten Zähnen besitzt, welche jeweils eine Mahlschneide und eine an die Mahlschneide angrenzende erste Mahlfläche aufweisen,

- eine zweite Mahlscheibe, die eine Anzahl von voneinander beabstandeten, durch Mahlnuten voneinander separierten Zähnen besitzt, welche jeweils eine Mahlschneide und eine an die Mahlschneide angrenzende zweite Mahlfläche aufweisen,

- wobei die erste Mahlscheibe und die zweite Mahlscheibe koaxial entlang einer gemeinsamen Drehachse unter Ausbildung eines sich zwischen der ersten Mahlscheibe und der zweiten Mahlscheibe erstreckenden Mahlspaltes angeordnet sind und sich jeweils im Wesentlichen senkrecht zu der gemeinsamen Drehachse erstrecken,

- wobei die erste Mahlscheibe und die zweite Mahlscheibe relativ zueinander um die gemeinsame Drehachse drehbar sind, sodass bei einer Drehung der zweiten Mahlscheibe relativ zur ersten Mahlscheibe jede der zweiten Mahlflächen der zweiten Mahlscheibe jeweils in eine Mahlrichtung relativ zur ersten Mahlscheibe bewegt wird, um die zu mahlenden Kaffeebohnen von einem Eintrittsspalt des Mahlwerkes in den Mahlnuten durch den Mahlspalt zu einem Austrittsspalt zu transportieren und mittels der zweiten Mahlflächen der zweiten Mahlscheibe zu zerkleinern, wobei jede zweite Mahlfläche der zweiten Mahlscheibe derart angeordnet ist, dass sie eine der Mahlnuten der zweiten Mahlscheibe an einer bezüglich der Mahlrichtung hinteren Seite der jeweiligen Mahlnut begrenzt,

- wobei jede der zweiten Mahlflächen der zweiten Mahlscheibe an einem beliebigen Punkt an der jeweiligen zweiten Mahlfläche einen Neigungswinkel $\varphi$ bezüglich einer Werkzeugbezugsebene, gemessen an einer angenommenen Arbeitsebene in der Mahlrichtung der jeweiligen zweiten Mahlfläche, aufweist,

- wobei die Werkzeugbezugsebene eine Ebene in dem beliebigen Punkt ist, welche parallel zur Mahlrichtung und senkrecht zur Drehachse ausgebildet ist, und

- wobei die angenommene Arbeitsebene eine parallel zur Drehachse und parallel zur Mahlrichtung ausgerichtete Ebene durch den beliebigen Punkt ist.

Während sich die aus dem Stand der Technik bekannten Mahlwerke an sich in der Praxis bewährt haben, gibt es gleichwohl den Bedarf, entsprechende Mahlwerke und diese enthaltende Kaffee-maschinen noch geräuschärmer zu gestalten.
Darüber hinaus soll die Zerkleinerung der Kaffeebohnen während des Mahlprozesses noch schonender erfolgen, um die darin enthaltenen bis zu 1000 Aromastoffe für den Brühprozess des gemahlenen Kaffeepulvers aufzusparen, und um einen vollmundigen Geschmack des schliesslich gebrühten Kaffeegetränkes zu erhalten.
Der vorliegenden Erfindung liegt daher die Aufgabe zugrunde, ein Mahlwerk anzugeben, welches Kaffeebohnen geräuschärmer zerkleinert und gleichzeitig schonender während des Zerkleinerungsprozesses behandelt.

Eine weitere Aufgabe der Erfindung besteht darin, eine Kaffemaschine anzugeben, welche Kaffee geräuscharm und aromatisch zubereitet.

Diese Aufgaben werden durch jeweils ein Mahlwerk mit den Merkmalen der unabhängigen Patentansprüche 1 bis 4 bzw. einer Kaffemaschine mit den Merkmalen des Patentanspruchs 11 gelöst.

Die erfindungsgemässen Mahlwerke, welche dem Mahlen von Kaffeebohnen dienen, zeichnen sich gegenüber den aus dem Stand der Technik bekannten Mahlwerken dadurch aus, dass der Neigungswinkel φ der jeweiligen Mahlfläche folgende Bedingung erfüllt:

$$90° < φ < 180°$$

Hierbei ist die zuvor dargestellte Konvention (für Kegelmahlwerke bzw. Scheibenmahlwerke der oben genannten Art) zu beachten.

Die erfindungsgemässen Mahlwerke haben den grossen Vorteil, dass sie aufgrund der erfindungsgemässen Geometrie der Mahlflächen die zu mahlenden Kaffeebohnen definiert und fein schneiden und nicht, wie aus dem Stand der Technik bekannt, zerbrechen.

Dies führt in vorteilhafter Weise zu einer verringerten Geräuschentwicklung während des Betriebes der erfindungsgemässen Mahlwerke.

Weiter führt dies zu einer, gegenüber dem Stand der Technik, verringerten Druckbelastung auf die einzelnen Kaffeebohnen, so dass zum einen die Temperatur der Kaffeebohnen während des Mahlprozesses nur noch vergleichsweise gering ansteigt, zum anderen Aromastoffe nicht mehr durch Einwirkung von Druck herausgelöst werden. Insgesamt zeichnen sich die Mahlwerke also daher in vorteilhafter Weise dadurch aus, dass die zu mahlenden Kaffeebohnen schonender zerkleinert werden.

Die erfindungsgemässen Mahlwerke zeichnen sich weiterhin dadurch in vorteilhafter Weise aus, dass nicht nur die Kaffeebohnen selbst, sondern auch in der Praxis unvermeidbar mit diesen anwesende Fremdkörper, wie beispielsweise Schalen oder Holz, besser geschnitten werden. Hierdurch wird ein an sich aus dem Stand der Technik bekanntes Blockieren des Mahlwerkes zuverlässig vermieden.

Die erfindungsgemässen Mahlwerke werden mittels Elektromotor angetrieben (wie an sich aus dem Stand der Technik bekannt), wozu eine bestimmte Stromaufnahme erforderlich ist. Diese ist bei den erfindungsgemässen Mahlwerken gegenüber den aus dem Stand der Technik bekannten Mahlwerken verringert, was in vorteilhafter Weise mit verringerten Betriebskosten bei einer entsprechend ausgerüsteten Kaffeemaschine einhergeht.

Schliesslich ist das mit den erfindungsgemässen Mahlwerken geschnittene Kaffeepulver in vorteilhafter Weise gegenüber dem aus dem Stand der Technik bekannten, zerbrochenen Kaffeepulver geringer elektrostatisch aufgeladen, was den vollständigen Transport des Kaffeepulvers vom Mahlwerk in eine nachgeordnete Brüheinheit erleichtert.

Weitere vorteilhafte Ausgestaltungen der Erfindung und insbesondere beispielhafte Ausführungsformen und Einzelheiten derselben werden im Folgenden anhand der beigefügten, nicht einschränkenden Zeichnungen erläutert. Es zeigen:

Fig. 1　　　eine schematische, perspektivische Explosionsdarstellung eines aus dem Stand der Technik bekannten Kegelmahlwerks mit Bezugsebenen gemäss Konvention;

Fig. 2　　　eine Draufsicht auf den Mahlkegel gemäss Fig. 1 in einem Schnitt in der Arbeitsebene mit Neigungswinkel gemäss Konvention;

Fig. 3　　　eine Teilschnittansicht durch ein Scheibenmahlwerk des Standes der Technik mit den Bezugsebenen und Winkeln gemäss Konvention;

Fig. 4　　　eine perspektivische Explosionsdarstellung eines erfindungsgemässen Kegelmahlwerks;

Fig. 5　　　das Mahlwerk gemäss Fig. 4 in einem Querschnitt durch die Ebene A-A gemäss Fig. 4;

Fig. 6A　　eine Schnittansicht des in Fig. 4 gezeigten Mahlkegels und Mahlrings;

Fig. 6B　　den in Fig. 4 gezeigten Mahlkegel in perspektivischer Draufsicht;

Fig. 6C　　eine Draufsicht auf den in Fig. 6A gezeigten Mahlkegel und Mahlring;

Fig. 6D　　den Mahlring gemäss Fig. 6A bzw. 6C in perspektivischer Einzelansicht;

Fig. 6E　　eine vereinfachte Draufsicht auf den Mahlring der Fig. 4 zur Darstellung eines Neigungswinkels;

Fig. 7A　　eine alternative Ausführungsform eines Mahlkegels gemäss der vorliegenden Erfindung in perspektivischer Ansicht;

Fig. 7B　　den Mahlkegel gemäss Figur 7A in Draufsicht;

Fig. 8A　　die Anordnung einer Kaffeebohne in einem erfindungsgemässen Mahlkegel und Mahlring in geschnittener Längsansicht;

Fig. 8B      den Mahlkegel und Mahlring der Figur 8A in Draufsicht;

Fig. 9A      die Position einer Kaffeebohne nach einer kleinen Drehung des Mahlkegels entsprechend Figur 8A in geschnittener Längsansicht;

Fig. 9B      den Mahlkegel und Mahlring der Figur 9A in Draufsicht;

Figur 10A      die Position der Kaffeebohne der Figuren 8A und 9A, nachdem sich der Mahlkegel weiter gedreht hat, in geschnittener Längsansicht;

Figur 10B      den Mahlkegel und den Mahlring der Figur 10A in Draufsicht;

Figur 11      ein als Scheibenmahlwerk ausgebildetes erfindungsgemässes Mahlwerk in Querschnittsansicht;

Figur 12      eine vergrösserte Ansicht des in Figur 11 gezeigten ersten und zweiten Mahlscheibe;

Figur 13A      die erste Mahlscheibe der Figur 11 einzeln in Draufsicht;

Figur 13B      die in Figur 13A gezeigte Mahlscheibe in geschnittener Seitenansicht;

Figur 14A      die zweite Mahlscheibe der Figur 11 einzeln in Draufsicht; und

Figur 14B      die in Figur 14A gezeigte Mahlscheibe in geschnittener Seitenansicht.

Für dieselben Elemente in den Figuren sind jeweils dieselben Bezugszeichen verwendet, wenn nichts anderes erwähnt ist.

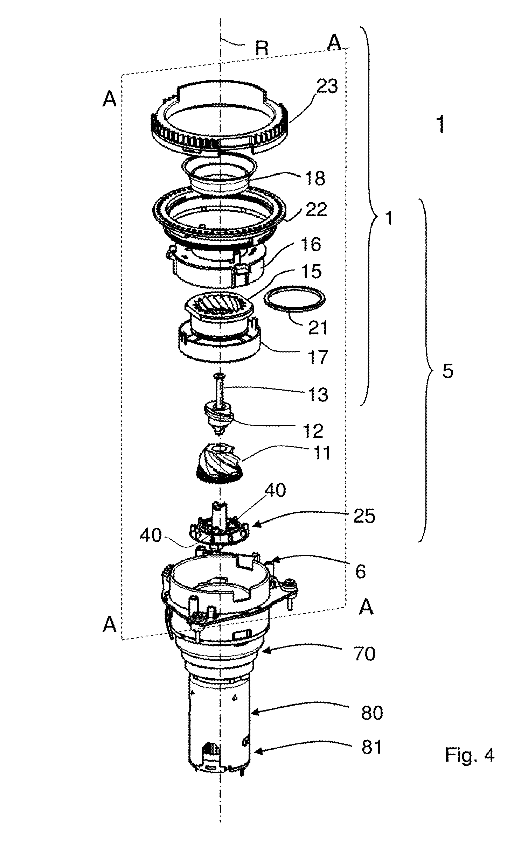

Nachdem die den Stand der Technik darstellenden Figuren 1 bis 3 bereits zuvor erläutert worden sind, soll nachfolgend direkt auf Figur 4 Bezug genommen werden.

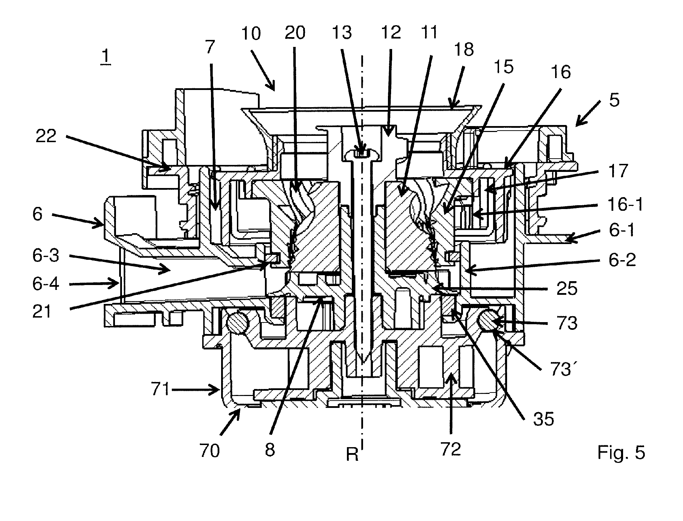

In Figur 4 ist ein Mahlwerk 1 zum Mahlen von Kaffeebohnen gezeigt, welches aus einer Mahlvorrichtung 5 mit einem Getriebe 70 und einem in einem Antriebsgehäuse 81 befindlichen Antriebsmotor 80 besteht. Die Mahlvorrichtung 5 ist aufgeteilt in eine Mahleinrichtung 10 und ein (Mitnehmerrad 25 mit einem oder mehreren Nocken 40, wobei diese Teile von einem Gehäuse 6 umgeben sind (siehe Figur 5). Das Mahlwerk 1 ist im vorliegenden Beispiel als Kegelmahlwerk ausgebildet. Entsprechend weist die Mahleinrichtung 10 einen Mahlkegel 11 und einen Mahlring 15 auf. Der Mahlkegel 11 ist um eine Drehachse R drehbar relativ zum Mahlring 15 angeordnet. In der Reihenfolge vom Mahlelement 11 nach oben sind ein drehbares Förderelement 12 (im vorliegenden Beispiel ausgebildet als Schnecke), eine Befestigungsschraube 13, ein Dichtungsring 21, ein Befestigungsring 17 für den Mahlring 15, ein Träger 16, ein Einstellring 22, ein Kopplungselement 18 und ein weiterer Ring 23 vorgesehen.

Figur 5 zeigt einen Querschnitt durch die Mahlvorrichtung 5 des Mahlwerkes 1 gemäss der Schnittlinie A-A in Figur 4. Im Gehäuse 6 ist eine erste obere Kammer 7 vorgesehen, welche die eigentliche Mahleinrichtung 10 aufnimmt, und eine zweite untere Kammer 8, welche das Mitnehmerrad 25 aufnimmt und dazu dient, das gemahlene Kaffeepulver weiter zu befördern. Das Gehäuse 6 besteht aus einer ersten äusseren Wand 6-1, welche die obere Kammer 7 begrenzt, einer zweiten Wand 6-2, welche die untere Kammer 8 begrenzt, einem Austrittskanal 6-3 und einer Austrittsöffnung 6-4, aus welchem das gemahlene Kaffeepulver aus dem Mahlwerk 1 abgegeben wird. Das in diesem Beispiel als Schnecke ausgebildete, drehbare Förderelement 12 dient dazu, das Mahlgut oder die Kaffeebohnen entlang der Drehachse R in den Eintrittsspalt 20 zwischen dem Mahlkegel 11 und dem Mahlring 15 zu befördern. Mit der Befestigungsschraube 13 sind der Mahlkegel 11, das Förderelement 12 und das Mitnehmerrad 25 an einem Antriebselement 72 des Getriebes 70 befestigt. Der Träger 16 weist Schnappelemente 16-1 zum Halten des Mahlrings 15 auf.

Der Befestigungsring 17 ist am Träger 16 fixiert, um die Schnappelemente 16-1 zu verriegeln, so dass der Mahlring 15 fest am Träger 16 gehalten ist. Das ringförmige Kopplungselement 18 besteht aus einem elastischen Material (z.B. Gummi oder Kunststoff) und ist auf dem Träger 16 aufgesetzt, um einen von oben aufsetzbaren Vorratsbehälter (nicht dargestellt) für das Mahlgut auf dem Mahlwerk 1 anzukoppeln. Der Dichtungsring 21 ist als Flachring aus Kunststoff ausgebildet und zwischen dem Mahlring 15 und dem Gehäuse 6 eingeklemmt, um zu verhindern, dass gemahlenes Kaffeepulver nach oben entweichen kann. Der Einstellring 22 ist drehbar um die Drehachse R am Gehäuse 6 gelagert, d.h. mechanisch gekoppelt am Träger 16, so dass der Einstellring 22 den Träger 16 mit dem zweiten Mahlelement 15 in Richtung der Drehachse R nach oben oder nach unten verschiebt, womit der Mahlgrad des Kaffees eingestellt wird. Das Mitnehmerrad 25 dient dem Transport des gemahlenen Kaffeepulvers und ist um die Drehachse R drehbar gelagert und über die (in Fig. 4 dargestellten) Nocken 40 an den Mahlkegel 11 gekoppelt. Eine Flachdichtung 35, beispielsweise aus Filz, dichtet die Unterseite des Mitnehmerrades 25 gegen das Gehäuse 6 ab und verhindert somit ein Entweichen des gemahlenen Kaffeepulvers nach unten. Das Getriebe 70 besteht aus einem Getriebegehäuse 71, dem Antriebselement 72, welches zum Antreiben des Mahlkegels 11 und der Mitnehmerflügel 26 dient, und einem Wälzlager 73 mit Kugeln 73', welches das Antriebselement 72 am Getriebe-Gehäuse 71 führt.

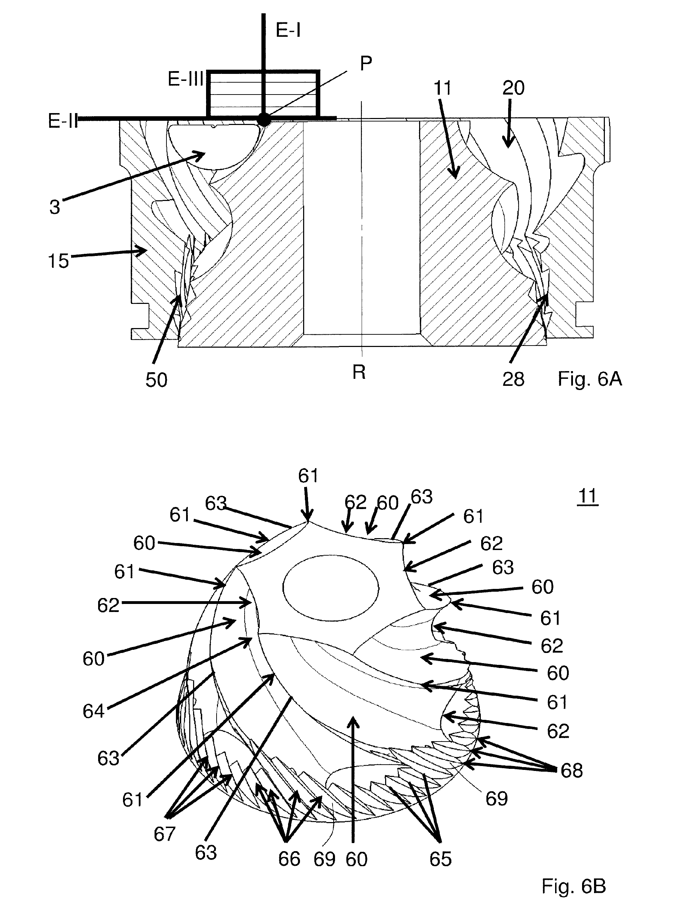

In den Figuren 6A bis 6E sind der Mahlkegel 11 sowie der Mahlring 15 genauer dargestellt:

Die Figur 6A ist eine Schnittansicht des in Figur 4 gezeigten Mahlkegels 11 und des Mahlrings 15, wobei sich der Mahlkegel 11 zumindest teilweise in dem Mahlring 15 befindet. Zwischen dem Mahlkegel 11 und dem Mahlring 15 ist ein Mahlspalt 50 vorgesehen, der sich von seinem in der Figur 6A oben gezeigten Eintrittsspalt 20 zu seinem in der Figur 6A unten dargestellten Austrittsspalt 28 verjüngt. In dem Eintrittsspalt 20 befindet sich eine Kaffeebohne 3, welche noch nicht gemahlen ist, sondern aus einem Vorratsbehälter (nicht gezeigt) kommend zwischen dem Mahlkegel 11 und dem Mahlring 15 zu liegen kommt.

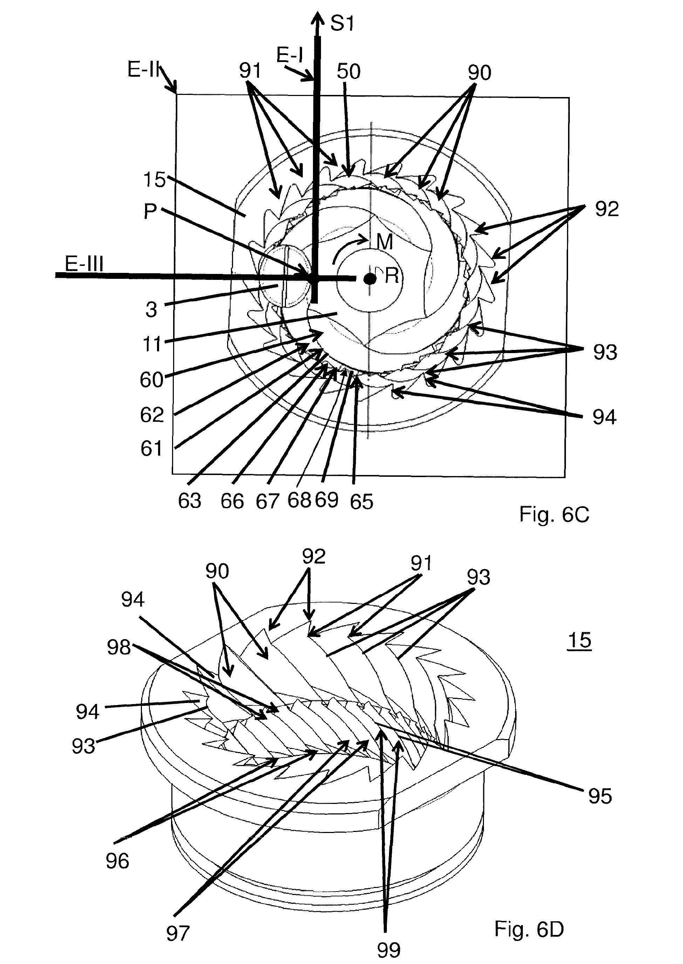

An einer Schneidkante des in der Figur 6A gezeigten Mahlkegels 11 ist ein beispielhafter, willkürlich gewählter Punkt P bezeichnet, von dem die angenommene Mahlrichtung S1 (in Fig. 6A nicht gezeigt) quasi vom Betrachter in die Papierebene hinein gerichtet ist (vgl. auch nachfolgende Figur 6C). Entsprechend der zuvor dargestellten Konvention befindet sich die Werkzeug-Bezugsebene E-I im Punkt P und ist parallel zur Mahlrichtung S1 sowie parallel zur Drehachse R ausgebildet. Eine angenommene Arbeitsebene E-II des Punktes P ist orthogonal zur Drehachse R im Punkt P ausgerichtet. Die Mahlschneideebene E-III befindet sich senkrecht auf der Werkzeugbezugsebene EI im Punkt P und liegt damit quasi in der Papierebene der Figur 6A.

Der in Figur 6B dargestellte, an sich aus dem Stand der Technik bekannte Mahlkegel 11 weist in seinem oberen Abschnitt sechs gleichmässig über seinen Umfang verteilte Mahlnuten 60 auf, welche sich von dem Eintrittsspalt 20 spiral- oder schraubenförmig in Richtung des Austrittsspaltes 28 erstrecken. Jede Mahlnut 60 weist an ihren jeweiligen Flanken einen Zahn 61 auf, welcher sich in der Längsrichtung der Mahlnut 60 erstreckt und jeweils einen Mahlfuss 62 und eine Mahlschneide 63 sowie eine an die Mahlschneide 63 angrenzende und sich zum Mahlfuss 62 erstreckende Mahlfläche 64 umfasst.

In analoger Weise ist der in Figur 6A untere Abschnitt des Mahlkegels 11 ausgebildet, wobei hier die Anzahl der Mahlnuten 66 des unteren Abschnittes des Mahlkegels 11, also die im Bereich des Austrittsspaltes 28 gelegenen Mahlnuten 66, erheblich höher ist als die Anzahl der Mahlnuten 60 des oberen Abschnittes des Mahlkegels 11, also solcher, die im Bereich des Eintrittsspaltes 20 vorgesehen sind. Hierdurch wird in vorteilhafter Weise ein zweistufiges Mahlwerk 1 geschaffen, in dem die Kaffeebohnen 3 besonders gleichmässig und fein gemahlen werden können.

Wie bereits in Bezug auf die im oberen Abschnitt der Mahlvorrichtung 5 gelegenen Mahlnuten 60 beschrieben besitzen auch die im unteren Bereich gelegenen jeweiligen Mahlnuten 66 jeweils Zähne 67, welche sich in der Längsrichtung der jeweiligen Mahlnut 60 erstrecken und jeweils einen Mahlfuss 68 und eine Mahlschneide 65 sowie eine an die Mahlschneide angrenzende Mahlfläche 69 aufweisen (in der Figur 6B sind aus Gründen der Übersichtlichkeit lediglich einige Zähne 67 exemplarisch bezeichnet). Auch in diesem Fall sind die Mahlnuten 68 gleichmässig über den Umfang des Mahlkegels 11 verteilt und erstrecken sich spiral- bzw. schraubenförmig. Ebenfalls ist jeweils eine Mahlfläche 69 zwischen zwei benachbarten Mahlfüssen 68 und einem zwischen ihnen liegenden Zahn 67 vorgesehen.

Figur 6C ist eine Draufsicht auf den in Figur 6A gezeigten Mahlkegel 11 und Mahlring 15. Die Kaffeebohne 3 liegt in dem Mahlspalt 50 teilweise auf einer Mahlnut 60 des Mahlkegels 11 und teilweise gegen den Mahlring 15 an; an dieser Stelle ist der beliebige Punkt P gewählt.

Wie bereits zuvor beschrieben weist der Mahlkegel 11 neben der Mahlnut 60 in seinem in Figur 6A oberen, d.h. in Figur 6C radial innenliegenden Abschnitt Zähne 61, Mahlfüsse 62, Mahlschneiden 63 und Mahlflächen 64 auf, von denen in dieser Darstellung lediglich einige aus Gründen der Übersichtlichkeit bezeichnet sind. Weiterhin weist der Mahlkegel 11 in seinem in Figur 6A unteren, d.h. in Figur 6C radial aussenliegenden Abschnitt Mahlnuten 66, Zähne 67, Mahlfüsse 68, Mahlschneiden 65 und Mahlflächen 69 auf, von denen ebenfalls aus Gründen der Übersichtlichkeit nur einige wenige in der Figur 6C bezeichnet sind.

Der Mahlkegel 11 kann gegenüber dem Mahlring 15 in Drehrichtung M um die Drehachse R drehen. Während sich die Drehachse R in Figur 6C quasi orthogonal aus der Papierebene heraus erstreckt, ist die Mahlrichtung S1 als Tangente an einen Kreis (hier nicht gezeigt), auf dem sich der Punkt P um die Drehachse R bewegt, dargestellt. Die angenommene Arbeitsebene E-II befindet sich in der Papierebene der Figur 6C, während die Werkzeugbezugsebene E-I und die Mahlschneideebene E-III orthogonal auf der Papierebene der Figur 6C stehen.

Unter Bezugnahme auf Figur 6C wird nachfolgend der Aufbau des Mahlrings 15 näher beschrieben. Es sei angemerkt, dass diese Beschreibung - wie dem Grundsatz nach auch für den Mahlkegel 11 - für sämtliche Komponenten des Mahlrings 15 gilt, wenngleich aus Gründen der Übersichtlichkeit nur einzelne Komponenten in Figur 6C bezeichnet sind: Der Mahlring 15 weist Mahlnuten 90 auf, die über dessen Umfang gleichmässig verteilt sind und sich spiral- bzw. schraubenförmig auf der Innenseite des im Wesentlichen zylindrisch ausgestalteten Mahlrings 15 erstrecken. Jede Mahlnut 90 befindet sich zwischen zwei benachbarten Zähnen 91, welche sich in der Längsrichtung der jeweiligen Mahlnut 90 erstrecken. Jeder Zahn 91 weist jeweils einen Mahlfuss 92, eine Mahlschneide 93 sowie eine an die Mahlschneide 93 angrenzende Mahlfläche 94 auf, gegen welche die Kaffeebohne 3 nach Eintritt in die Mahlvorrichtung 5 zu liegen kommt.

Wie der in Figur 6B gezeigte Mahlkegel 11 ist auch der Mahlring 15 zweistufig ausgebildet: in dem in der Figur 6D oberen Bereich des Mahlrings 15 ist die Anzahl der Mahlnuten 90 geringer als die entsprechende Anzahl an Mahlnuten 96 im unteren Bereich des Mahlrings 15. Im zusammengebauten Zustand des erfindungsgemässen Mahlwerkes 1 sind also ein Teil des Mahlkegels 11 und des Mahlrings 15 mit vergleichsweise geringer Anzahl an Mahlnuten 60 bzw. 90 am Eingangsspalt 20 benachbart angeordnet, während an dessen Austrittsspalt 28 ein Teil mit vergleichsweise höherer Anzahl an Mahlnuten 66 bzw. 96 gegenüberliegen. Hierdurch wird in vorteilhafter Weise ein zweistufiges, Kaffebohnen 3 sehr fein mahlendes Mahlwerk 1 geschaffen.

Auch die in der Figur 6D gezeigten unteren Mahlnuten 96 weisen, wie zuvor bezüglich der Mahlnuten 90 analog beschrieben, jeweils einen Zahn 97 auf, der seinerseits jeweils einen Mahlfuss 98 sowie eine Mahlschneide 95 besitzt; auch ist eine jeweilige an die Mahlschneide 95 angrenzende Mahlfläche 99 vorgesehen.

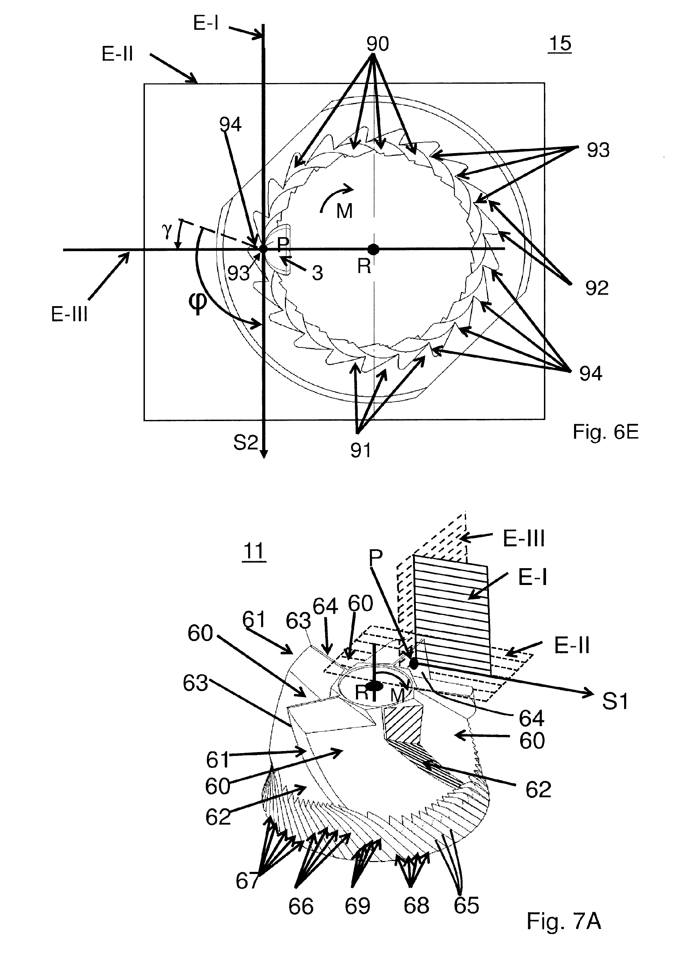

Figur 6E zeigt den Mahlring 15 in vereinfachter Draufsicht. Der Mahlring 15 weist die beschriebene Anzahl von Mahlnuten 90, Zähnen 91, Mahlfüssen 92, Mahlschneiden 93 und Mahlflächen 94 auf. Eine Kaffeebohne 3 liegt im Punkt P gegen eine Mahlfläche 94 an. Bei einer Drehung des in dieser Figur 6E nicht gezeigten Mahlkegels um die Drehachse R in der Drehrichtung M ergibt sich für die Kaffeebohne 3 im Punkt P auf der Mahlfläche 94 eine Mahlrichtung S2, die in der angenommenen Arbeitsrichtung E-II liegt (wobei die Mahlrichtung S2 die Richtung angibt, in welcher sich der Punkt P relativ zum Mahlkegel, d.h. entgegengesetzt zur Drehrichtung M des Mahlkegels orientiert, bewegt). Die Werkzeugbezugsebene E-I für den Punkt P der Figur 6E ist parallel zur Mahlrichtung S2 und parallel zur Drehachse R ausgebildet und steht damit quasi senkrecht zur Papierebene. Die Mahlschneideebene E-III ihrerseits geht durch den Punkt P und steht senkrecht auf der Werkzeugbezugsebene E-I.

Wie aus den Figuren 6D und 6E ersichtlich, ist jede Mahlflächen 94 derart angeordnet, dass sie eine der Mahlnuten 90 des Mahlrings 15 an einer bezüglich der Mahlrichtung S2 hinteren Seite der jeweiligen Mahlnut 90 begrenzt. Entsprechend ist jede Mahlfläche 99 derart angeordnet, dass sie eine der Mahlnuten 96 des Mahlrings 15 an einer bezüglich der Mahlrichtung S2 hinteren Seite der jeweiligen Mahlnut 96 begrenzt.

Die Mahlfläche 94 ist im Punkt P erfindungsgemäss gegen die Werkzeugbezugsebene E-I mit einem Winkel grösser als 90° und kleiner als 180° geneigt. Präziser ausgedrückt weist die Mahlfläche 94 im Punkt P einen Neigungswinkel φ von beispielhaft 110° gegenüber der Werkzeugbezugsebene E-I, gemessen an der angenommenen Arbeitsebene E-II in Richtung der Mahlrichtung S2, auf. Der Neigungswinkel φ ist positiv, da er ausgehend von der Mahlfläche 94 in Richtung der Werkzeugbezugsebene EI bzw. in Richtung der Mahlrichtung S2 im Gegenuhrzeigersinn betrachtet wird.

Aufgrund dieser entsprechend der Erfindung derart eingestellten Mahlfläche 94 ist es in vorteilhafter Weise möglich, die Kaffeebohne 3 effektiv zu schneiden und die bereits zuvor genannten Vorteile der Erfindung zu erzielen.

Es sei angemerkt, dass in dem hier betrachteten Ausführungsbeispiel ein repräsentativer Neigungswinkel φ des dem Eintrittsspalt 20 benachbarten Bereiches des Mahlrings 15 gezeigt worden ist. Es versteht sich aber als im Rahmen der Erfindung offenbart, dass auch die dem Austrittsspalt 28 benachbarten, jeweils eine der Mahlnuten 96 begrenzenden Mahlflächen 99 jeweils einen Neigungswinkel φ aufweisen können, der grösser als 90° und kleiner als 180° ist.

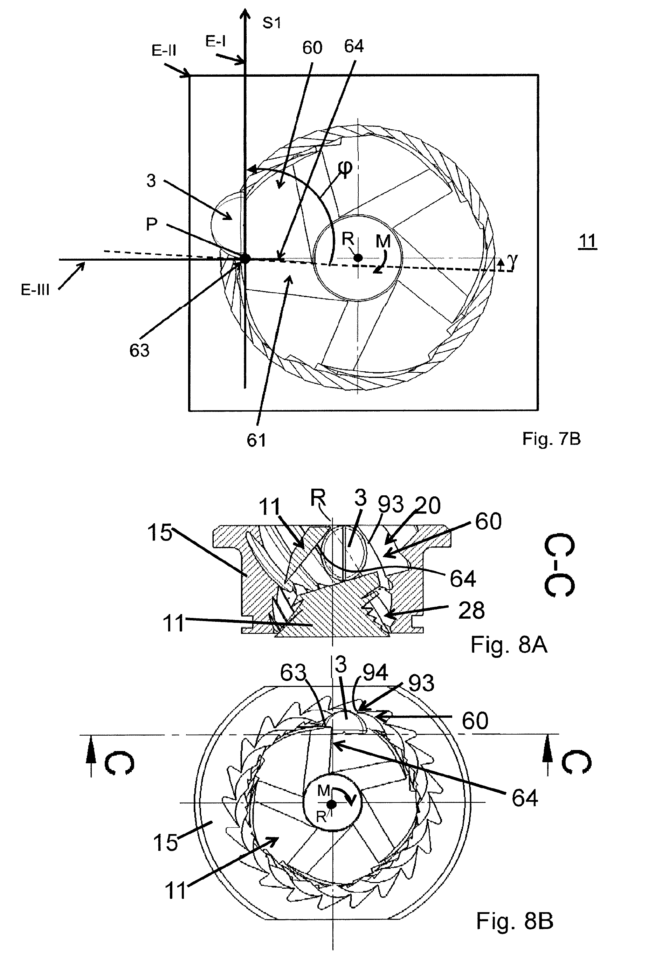

So wie der Mahlring 15 kann auch der Mahlkegel 11 mit Mahlflächen ausgestattet sein, welche einen Neigungswinkel φ, der grösser als 90° und kleiner als 180° ist, aufweisen, wie nun anhand der Figuren 7A und 7B erläutert werden soll.

Der in Figur 7A gezeigte Mahlkegel 11 weist in dessen oberem Bereich fünf, gleichmässig über den Umfang angeordnete Mahlnuten 60 auf, die dem Eintrittsspalt 20 der Mahlvorrichtung 5 in einer Kaffeemaschine benachbart sind. Jede dieser Mahlnuten 60 weist entsprechende Zähne 61 (wovon einer geschnitten dargestellt ist), Mahlfüsse 62, Mahlschneiden 63 und Mahlflächen 64 auf, wie dies an sich bereits zu Figur 6B beschrieben ist. Die Mahlnuten 60 verlaufen spiral- bzw. schraubenförmig um die Drehachse R des Mahlkegels 11.

Auch in diesem Fall ist der Mahlkegel 11 zweistufig ausgebildet, indem neben den zuvor beschriebenen Mahlnuten 60 etc. weitere Mahlnuten 66 und Zähne 67 mit jeweils einem Mahlfuss 68, einer Mahlschneide 65 und einer an die Mahlschneide angrenzenden Mahlfläche 69 in dessen unterem Bereich, mithin dem Austrittsspalt 28 der montierten Mahlvorrichtung 5 benachbart, vorgesehen sind, wobei die Anzahl der zuletzt genannten Mahlflächen 69 erheblich grösser ist als die Anzahl der zuerst genannten Mahlflächen 64; aus Gründen der Übersichtlichkeit sind nicht alle entsprechenden Komponenten in der Figur 7A bezeichnet. Die Mahlnuten 66 verlaufen ebenfalls spiral- bzw. schraubenförmig an der Aussenseite des Mahlkegels 11.

Auf einer Mahlfläche 64 eines Zahnes 61 ist ein beliebiger Punkt P gewählt. Dieser dreht sich auf einer Kreisbahn (nicht gezeigt) um die Drehachse R in Drehrichtung M. Damit ergibt sich entsprechend der vorher genannten Konvention eine angenommene Mahlrichtung S1, wie sie der Figur 7A entnommen werden kann. Die Werkzeugbezugsebene E-I ist eine Ebene im Punkt P, welche parallel zur Mahlrichtung S1 und parallel zur Drehachse R ausgebildet ist. Die angenommene Arbeitsebene E-II ergibt sich als orthogonal zur Drehachse R und parallel zur Mahlrichtung S1 ausgerichtete Ebene durch den Punkt P, und die Mahlschneideebene E-III steht dann als Ebene durch den Punkt P und senkrecht auf der Werkzeugbezugsebene E-I und senkrecht zur Arbeitsebene E-II bzw. senkrecht zur Mahlrichtung S1.

Der in Figur 7A gezeigte Mahlkegel 11 ist in Figur 7B in Draufsicht abgebildet (in Figur 7B sind alle Zähne des Mahlkegels 11 im Unterschied zur Figur 7A ungeschnitten dargestellt). Eine Kaffeebohne 3 liegt teilweise an dem Punkt P an, welcher sich auf der Mahlfläche 64 des hier betrachteten Zahnes 61 befindet. Die aus der Figur 7A ersichtlichen Ebenen E-I, E-II und E-III sind in Figur 7B ebenfalls gezeigt.

Der Neigungswinkel φ der Mahlfläche 64 im Punkt P ist erfindungsgemäss der Winkel zwischen dieser Mahlfläche 64 und der Werkzeugbezugsebene E-I, gemessen an der angenommenen Arbeitsebene E-II in Richtung der Mahlrichtung S1. Auch hier ist der Neigungswinkel φ positiv, da er ausgehend von der Mahlfläche 64 in Richtung Werkzeugbezugsebene E-I bzw. in Richtung der Mahlrichtung S1 im Gegenuhrzeigersinn betrachtet wird. Der in diesem Ausführungsbeispiel gezeigte Neigungswinkel φ beträgt 93° und ist damit erfindungsgemäss grösser als 90° und kleiner als 180°, doch können je nach Ausgestaltung des Mahlkegels 11 und/oder des Mahlrings 15 insbesondere im Hinblick auf die jeweilige Anzahl oder Dimensionierung der Mahlnuten 60, 66 bzw. 90, 96 und/oder des Werkstoffes, andere Neigungswinkel φ vorteilhaft sein.

Wie aus den Figuren 7A und 7B ersichtlich, ist jede Mahlfläche 64 derart angeordnet, dass sie eine der Mahlnuten 60 des Mahlkegels 11 an einer bezüglich der Mahlrichtung S1 hinteren Seite der jeweiligen Mahlnut 60 begrenzt. Entsprechend ist jede Mahlfläche 69 derart angeordnet, dass sie eine der Mahlnuten 66 des Mahlkegels 11 an einer bezüglich der Mahlrichtung S1 hinteren Seite der jeweiligen Mahlnut 66 begrenzt.

Es sei an dieser Stelle ausdrücklich betont, dass der Neigungswinkel φ lediglich an einem ausgewiesenen Punkt P erläutert worden ist. Dies bedeutet im Umkehrschluss, dass auch alle anderen Mahlflächen 64 sowie 69 Neigungswinkel φ aufweisen, welche mit dem gezeigten Neigungswinkel φ identisch sind oder von diesem abweichen können, wobei er erfindungsgemäss in jedem Fall grösser als 90° und kleiner als 180° entsprechend der definierten Konvention ist.

Mit diesem erfindungsgemässen Mahlkegel 11 ist es in besonders vorteilhafter Weise möglich, Kaffeebohnen 3 effektiv zu schneiden, was zu einer geringeren Lärmemission des im Betrieb befindlichen Mahlwerkes 1 und einer schonenden Zerkleinerung der Kaffeebohnen 3 führt.

Im Folgenden nun soll beispielhaft dargestellt werden, wie eine in einem erfindungsgemäss ausgebildeten Mahlwerk 1 befindliche Kaffeebohne 3 gemahlen wird. Konkret zeigen die Figuren 8A, 9A und 10A einen Mahlkegel 11 und einen Mahlring 15 der erfindungsgemässen Art in geschnittener Seitenansicht. Die Anordnungen der jeweiligen Schnitte C-C, D-D bzw. E-E sind anhand der Figuren 8B, 9B und 10B gezeigt, welche jeweils eine Draufsicht auf den Mahlkegel 11 und den Mahlring 15 entsprechende Schnitte der Figuren 8A, 9A bzw. 10A darstellen.

In dem in Figur 8A gezeigten Eintrittsspalt 20 zwischen dem Mahlkegel 11 (der beispielsweise entsprechend Figur 7A ausgestaltet sein kann) und dem Mahlring 15 (der beispielsweise entsprechend Figur 6E ausgestaltet sein kann) befindet sich eine noch nicht geschnittene Kaffeebohne 3 in einem Mahlspalt 60. Die obere Kante der in Figur 8A gezeigten Kaffeebohne 3 schliesst mit dem oberen Rand des Mahlrings 15 ab.

Sobald der Antriebsmotor 80 (hier nicht dargestellt) in Betrieb genommen wird, dreht der Mahlkegel 11 um die Drehachse R in Drehrichtung M. Dabei wird die Kaffeebohne 3 in der Figur 9A und Figur 9B in der Mahlnut 60 nach rechts sowie nach unten (Figur 9A) bewegt, was einer in der Realität ansatzweisen spiral- bzw. schraubenförmigen Bewegung der Kaffeebohne 3 in Richtung Austrittsspalt 28 entspricht. Wie der Figur 9A entnommen werden kann, befindet sich das obere Ende der Kaffeebohne 3 nicht mehr am oberen Rand des Mahlrings 15*. Die Mahlschneide 63 schneidet nun in die Kaffeebohne 3 hinein, während diese gegen eine Mahlschneide 93 des Mahlrings 15 anliegt. Dabei gleitet die Mahlfläche 64 in die Kaffeebohne 3 hinein, sodass ein Abschnitt der Kaffeebohne 3 über die Mahlfläche 64 gleitet. Entsprechend schneidet die Mahlschneide 93 des Mahlrings 15 (von einer der Mahlschneide 83 gegenüberliegenden Seite) in die Kaffeebohne 3 hinein. Dabei gleitet die Mahlfläche 94 ebenfalls in die Kaffeebohne 3 hinein, sodass ein Abschnitt der Kaffeebohne 3 über die Mahlfläche 94 gleitet.

Bei fortgesetzter Drehung des Antriebsmotors 80 in Drehrichtung M bewegen sich die Mahlflächen 64 und 94 weiter durch die Kaffeebohne 3 und schneiden diese in zwei Kaffeebohnenschnitte 3' bzw.3", wobei sich die beiden Teile weiter in Richtung Austrittsspalt 28 bewegt haben. Bei noch weiter fortgesetzter Drehung des Antriebsmotors 80 bewegen sich die Kaffeebohnenschnitte 3' bzw. 3" weiter durch die Mahlvorrichtung 5, wobei sie durch den Eingriff der an dem Mahlkegel 11 und dem Mahlring 15 befindlichen Mahlflächen 64 bzw. 94 immer weiter geschnitten werden, bis sie die Mahlvorrichtung aus dem Austrittsspalt 28 pulverförmig verlassen.

Im Gegensatz zu dem aus dem Stand der Technik bekannten Verfahren wird also eine Kaffeebohne 3 nicht zerdrückt, sondern effektiv geschnitten. Dies geht in vorteilhafter Weise mit einer geringeren Geräuschentwicklung, einer geringeren Stromaufnahme des Antriebsmotors 80 sowie einer schonenderen Behandlung der Kaffeebohne 3 einher.

Die zuvor beschriebenen Ausführungsformen der erfindungsgemässen Vorrichtung hatten jeweils Kegelmahlwerke zum Gegenstand. Die Erfindung umfasst aber auch Scheibenmahlwerke, wie im Folgenden dargestellt werden wird.

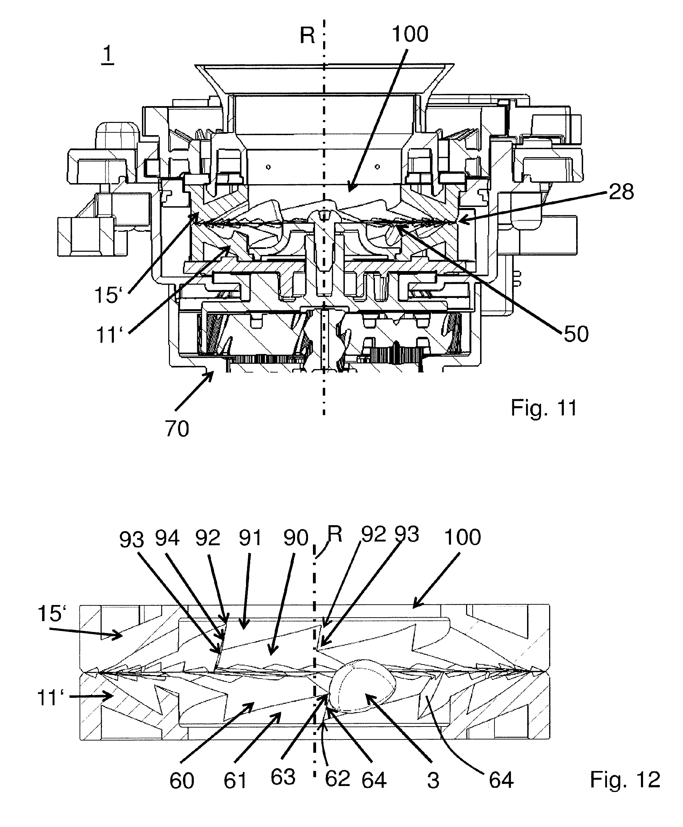

So ist in Figur 11 ein Teil eines Mahlwerkes 1 in Querschnittansicht mit einer ersten Mahlscheibe 11' und einer zweiten Mahlscheibe 15' gezeigt. An sich sind Scheibenmahlwerke aus dem Stand der Technik bekannt, so dass an dieser Stelle auf diesbezügliche detaillierte Ausführungen verzichtet werden kann. Insbesondere ist aus dem Stand der Technik bekannt, dass die erste Mahlscheibe 11' vermittels Antriebsmotors 80 (hier nicht gezeigt) und daran angeschlossenem Getriebe 70 um eine Drehachse R dreht. Die zweite Mahlscheibe 15' ist demgegenüber drehfest in dem Mahlwerk 1, aber koaxial mit der ersten Mahlscheibe 11' angeordnet. Zwischen der ersten Mahlscheibe 11' und der zweiten Mahlscheibe 15' befindet sich ein Mahlspalt 50. Die Zuführung von Kaffeebohnen 3 (hier nicht dargestellt) zu der ersten bzw. zweiten Mahlscheibe 11' bzw. 15' erfolgt durch eine Öffnung 100 in der zweiten Mahlscheibe 15' in der Nähe der Drehachse R. Der Mahlspalt 50 erstreckt sich zwischen der ersten Mahlscheibe 11' und der zweiten Mahlscheibe 15' radial nach aussen und bildet am äusseren Rand der der ersten Mahlscheibe 11' bzw. der zweiten Mahlscheibe 15' einen Austrittsspalt 28, durch welchen Kaffeepulver im Betrieb des Mahlwerks 1 aus dem Mahlspalt 50 abgeführt werden kann.

Eine vergrösserte Ansicht der in Figur 11 gezeigten ersten Mahlscheibe 11' und zweiten Mahlscheibe 15' ist in Figur 12 dargestellt, die zusätzlich eine beispielhafte Lage einer nicht gemahlenen Kaffeebohne 3 zeigt. Die Kaffeebohne 3 gelangt bei Betätigung einer entsprechenden Kaffeemaschine (hier nicht dargestellt) durch die Öffnung 100 auf die erste Mahlscheibe 11'. Dieses weist eine Anzahl von insbesondere Mahlnuten 60 und sich in Längsrichtung einer der Mahlnuten erstreckenden Zähnen 61 mit jeweils einer Mahlschneide 63 und einer die Mahlschneide 63 angrenzende Mahlfläche 64 auf, wie dies bereits zuvor in Bezug auf Kegelmahlwerke beschrieben worden war. Die zweite Mahlscheibe 15' weist eine Anzahl von Mahlnuten 90 und Zähnen 91 mit jeweils einem Mahlfuss 92, einer Mahlschneide 93 und einer an die Mahlschneid angrenzenden Mahlfläche 94 auf, wie dies bereits zuvor in Bezug auf Kegelmahlwerke beschrieben worden war. Es sei angemerkt, dass nur ein Teil dieser vorhandenen Komponenten in der Figur 12 aus Gründen der Übersichtlichkeit bezeichnet worden ist.

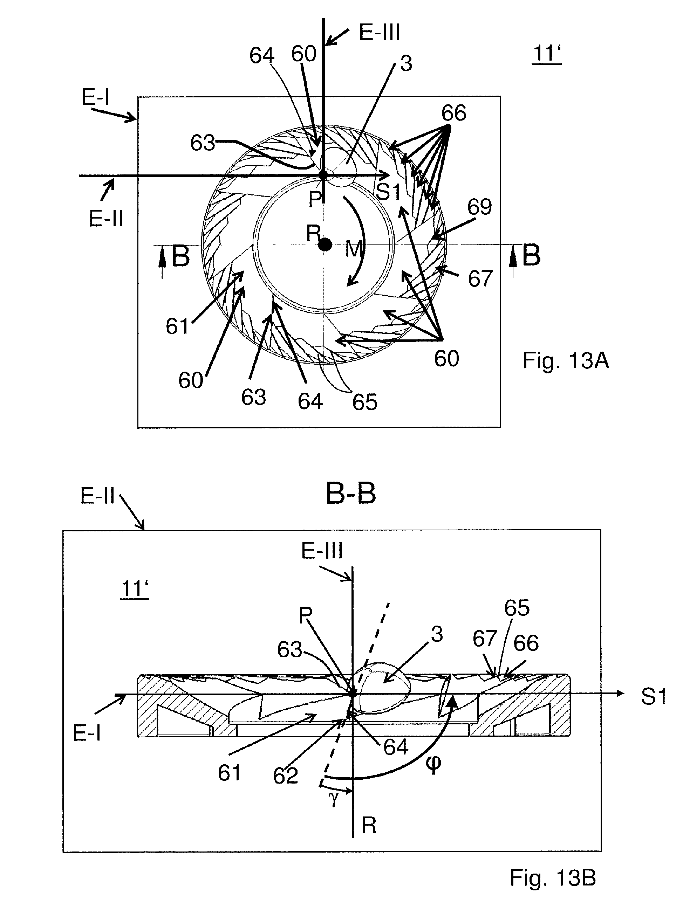

In Figur 13A ist die erste Mahlscheibe 11' einzeln in Draufsicht dargestellt. Radial innenliegend und gleichmässig verteilt weist die erste Mahlscheibe 11' acht Mahlnuten 60 auf, die sich vom radial innen liegenden Bereich in Richtung radial aussen liegendem Bereich vergrössern; dies ist jedoch nicht zwingend, und die Mahlnuten können in radialer Richtung auch eine konstante Breite aufweisen. In einer der gezeigten Mahlnuten 60 befindet sich eine Kaffeebohne 3.

Auch die als Scheibenmahlwerk ausgestaltete erfindungsgemässe Mahlvorrichtung 5 kann zweistufig ausgebildet sein, wie der Figur 13A zu entnehmen ist: Jede Mahlnut 60 weist ihrerseits nämlich radial aussen liegend weitere sechs Mahlnuten 66 auf, die ihrerseits Zähne 67 mit jeweils einem Mahlfuss 68, einer Mahlschneide 65 und einer an die Mahlschneide 65 angrenzende und Mahlfläche 69 haben, von denen aus Gründen der Übersichtlichkeit der hier beschriebenen Figur lediglich einige wenige bezeichnet sind. Die Anzahl der Mahlnuten 60 bzw. 66 ist an sich frei wählbar.

Auf einer Mahlfläche 64 der ersten Mahlscheibe 11' ist ein fiktiver Punkt P derart gewählt, dass ein Teil der Kaffeebohne 3 in ihm liegt. Dieser dreht sich um die Drehachse R auf einer Kreisbahn (nicht gezeigt) in Drehrichtung M. Die in der Figur 13A gezeigte angenommene Mahlrichtung S1 ergibt sich gemäss der zuvor beschriebenen Konvention als Tangente durch den Punkt P an den (nicht gezeigten) Kreis, auf dem sich der Punkt P bewegt. Die Werkzeugbezugsebene E-I ist dann eine Ebene im Punkt P, welche parallel zur Mahlrichtung S1 und senkrecht zur Drehachse R ausgebildet ist. Die angenommene Arbeitsebene E-II ist die parallel zur Drehachse R und parallel zur Mahlrichtung S1 ausgerichtete Ebene durch den Punkt P, und die Mahlschneideebene E-III ist die gezeigte Ebene durch den Punkt P, die senkrecht auf der Werkzeugbezugsebene E-I und senkrecht zur Arbeitsebene E-II bzw. senkrecht zur Mahlrichtung S1 steht.

Figur 13B stellt einen Querschnitt durch die erste Mahlscheibe 11' entlang der Schnittlinie B-B in Figur 13A dar. Der Zahn 61 weist einen Mahlfuss 62, eine Mahlschneide 63 und eine an die Mahlschneide 63 angrenzende Mahlfläche 64 auf (wie dies dem Grundsatz nach bereits zuvor beschrieben worden war). Die Kaffeebohne 3 liegt in einer Mahlnut 60 im Punkt P gegen die Mahlfläche 64 an. Der Punkt P bewegt sich auf einer Kreisbahn um die Drehachse R in die Drehrichtung M (vgl. Figur 13A). Auf Basis der bereits beschriebenen Konvention ergibt sich die angenommene Mahlrichtung S1, d.h. sie ist eine Tangente durch den Punkt P an den (nicht gezeigten) Kreis, auf dem sich der Punkt P bewegt. Hiervon ausgehend liegt die Werkzeugbezugsebene E-I im Punkt P parallel zur Mahlrichtung S1 und senkrecht zur Drehachse R. Die Arbeitsebene E-II ist dann die parallel zur Drehachse R und parallel zur Mahlrichtung S1 ausgerichtete Ebene durch den Punkt P, und die Mahlschneideebene E-III ergibt sich als Ebene durch den Punkt P, die senkrecht auf der Werkzeugbezugsebene E-I und senkrecht zur Arbeitsebene E-II steht.

Wie aus den Figuren 13A und 13B ersichtlich, ist jede Mahlfläche 64 der ersten Mahlscheibe 11' derart angeordnet ist, dass sie eine der Mahlnuten 60 der ersten Mahlscheibe 11' an einer bezüglich der Mahlrichtung S1 hinteren Seite der jeweiligen Mahlnut 60 begrenzt. Entsprechend ist jede Mahlfläche 69 der ersten Mahlscheibe 11' derart angeordnet, dass sie eine der Mahlnuten 66 der ersten Mahlscheibe 11' an einer bezüglich der Mahlrichtung S1 hinteren Seite der jeweiligen Mahlnut 66 begrenzt.

Der Neigungswinkel φ zwischen der Mahlfläche 64 und der Werkzeugbezugsebene E-I, gemessen an der angenommenen Arbeitsebene E-II in Richtung der Schnittrichtung S1, ist in der Figur 13B eingezeichnet. In dem hier vorliegenden Ausführungsbeispiel beträgt der Neigungswinkel φ 110° und ist damit erfindungsgemäss grösser als 90° und kleiner als 180°. Es sei angemerkt, dass ein solcher Neigungswinkel φ auch für die in der Figur 13A radial aussen liegenden Mahlflächen 69 etc. definiert sind; aus Gründen der Übersichtlichkeit der Figuren 13A und 13B wurde jedoch auf deren Darstellung verzichtet. Je nach Ausgestaltung der ersten Mahlscheibe 11' und/oder der zweiten Mahlscheibe 15' können, insbesondere im Hinblick auf die jeweilige Anzahl oder Dimensionierung der Mahlnuten 60 bzw. 66 und/oder des Werkstoffes, auch andere Neigungswinkel φ vorteilhaft sein. Auch ist es erfindungsgemäss möglich, an jedem Zahn 61 bzw. 67 unterschiedliche Neigungswinkel φ vorzusehen.

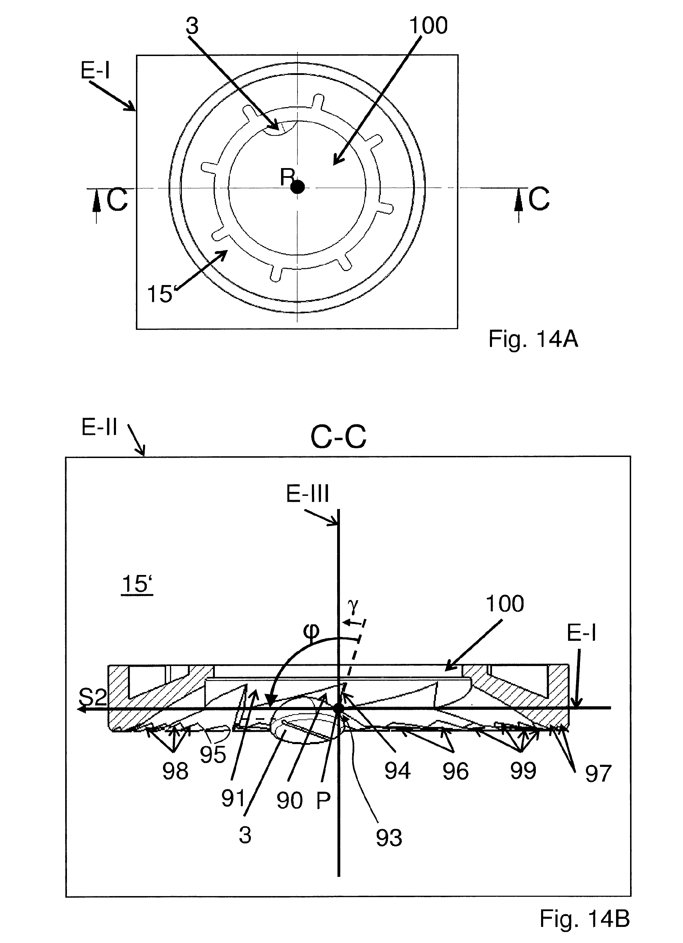

Die in Figur 11 gezeigte zweite Mahlscheibe 15' ist einzeln in Draufsicht in Figur 14A vergrössert gezeigt. Durch die Öffnung 100 ist ein Teil einer Kaffeebohne 3 zu erkennen. Die angenommene Arbeitsebene E-II befindet sich in der Papierebene dieser Figur.

In Figur 14B ist die in Figur 14A gezeigte zweite Mahlscheibe 15' in geschnittener Seitenansicht entlang der Schnittlinie C-C der Figur 14A dargestellt. Radial innenliegend sind Mahlnuten 90 gleichmässig über den Umfang der zweiten Mahlscheibe 15' verteilt angeordnet, die jeweils - wie zuvor bereits beschrieben - einen Zahn 91 mit einer Mahlschneide 93 und mit einer an die Mahlschneide 93 angrenzenden Mahlfläche 94 aufweisen. Radial aussenliegend sind weitere, eine zweite Mahlstufe bildende Mahlnuten 96 und sich entlang einer der Mahlnuten 96 erstreckenden Zähne 97 mit jeweils einer Mahlschneide 95 und einer an die Mahlschneide 95 angrenzende Mahlfläche 99 vorgesehen, die gegenüber den radial innenliegenden Mahlnuten 90 etc. kleiner, dafür aber zahlreicher sind. Aus Gründen der Übersichtlichkeit der hier beschriebenen Figur 14B ist lediglich ein Teil dieser Komponenten bezeichnet.

Die Kaffeebohne 3 liegt in einer Mahlnut 90 im Punkt P gegen die Mahlfläche 94 bzw. die Mahlschneide 93 an. Der Punkt P bewegt sich relativ zur ersten Mahlscheibe 11' (in Fig. 14B nicht dargestellt) auf einer (nicht gezeigten) Kreisbahn um die Drehachse R entgegen der Drehrichtung M (vgl. Figur 14A). Auf Basis der bereits beschriebenen Konvention ergibt sich die angenommene Mahlrichtung S2, d.h. sie ist eine Tangente durch den Punkt P an den (nicht gezeigten) Kreis, auf dem sich der Punkt P relativ zur ersten Mahlscheibe 11' bewegt. Hiervon ausgehend liegt die Werkzeugbezugsebene E-I im Punkt P parallel zur Mahlrichtung S2 und senkrecht zur Drehachse R. Die angenommene Arbeitsebene E-II ist die parallel zur Drehachse R und parallel zur Mahlrichtung S2 ausgerichtete Ebene durch den Punkt P, und die Mahlschneideebene E-III ergibt sich als Ebene durch den Punkt P, die senkrecht auf der Werkzeugbezugsebene E-I und senkrecht zur Arbeitsebene E-II bzw. senkrecht zur Mahlrichtung S2 steht.

Wie aus Fig. 14B ersichtlich, ist jede Mahlfläche 94 der zweiten Mahlscheibe 15' derart angeordnet, dass sie eine der Mahlnuten 90 der zweiten Mahlscheibe 15' an einer bezüglich der Mahlrichtung S2 hinteren Seite der jeweiligen Mahlnut 90 begrenzt. Entsprechend ist jede Mahlfläche 99 der zweiten Mahlscheibe 15' derart angeordnet, dass sie eine der Mahlnuten 96 der zweiten Mahlscheibe 15' an einer bezüglich der Mahlrichtung S2 hinteren Seite der jeweiligen Mahlnut 96 begrenzt.

Der Neigungswinkel φ zwischen der Mahlfläche 94 und der Werkzeugbezugsebene E-I, gemessen an der angenommenen Arbeitsebene E-II in Richtung der Mahlrichtung S2, ist in der Figur 14B eingezeichnet und beträgt in diesem Ausführungsbeispiel 110°. Er ist damit erfindungsgemäss grösser als 90° und kleiner als 180°. Auch hier sei angemerkt, dass der Neigungswinkel φ auch für die in der Figur 14A radial aussen liegenden Mahlflächen 99 definiert ist; aus Gründen der Übersichtlichkeit der Figuren 14A und 14B wurde jedoch auf deren Darstellung verzichtet.

Je nach Ausgestaltung der ersten Mahlscheibe 11' und/oder der zweiten Mahlscheibe 15' können, insbesondere im Hinblick auf die jeweilige Anzahl oder Dimensionierung der Mahlnuten 90 bzw. 96 und/oder des Werkstoffes, auch andere Neigungswinkel φ vorteilhaft sein; auch können gemäss der hier vorliegenden Erfindung an jedem Zahn 91 bzw. 97 unterschiedliche Neigungswinkel φ vorgesehen sein.

Es sei angemerkt, dass das erfindungsgemässe Mahlwerk 1 nicht nur, wie zuvor beschrieben, zweistufig ausgebildet sein kann: Vielmehr ist es auch möglich, ein einstufiges Mahlwerk vorzusehen, bei dem sich die Anzahl der Mahlnuten nicht ändert, oder aber ein mehrstufiges Mahlwerk vorzusehen, bei dem sich die Anzahl der Mahlnuten in zwei oder mehr Stufen erhöht, beispielsweise durch eine gegenüber der in Figur 6B gezeigten weitere Anzahl von Mahlnuten, die grösser ist als die Anzahl der dort gezeigten Mahlnuten 60 bzw. 66, oder der in Figur 3D gezeigten Mahlnuten 90 bzw. 96. Auch ist es möglich, aus dem Stand der Technik bekannte Mahlkegel, Mahlringe oder Mahlscheiben mit korrespondierenden erfindungsgemässen Mahlkegeln 11, Mahlringen 15, ersten Mahlscheiben 11' bzw. zweiten Mahlscheiben 15' zu kombinieren.

Weiterhin kann vorgesehen sein, dass nicht der Mahlkegel 11 bzw. die erste Mahlscheibe 11' durch den Antriebsmotor 80 angetrieben werden, sondern der Mahlring 15 bzw. die zweite Mahlscheibe 15' oder eine beliebige Kombination derselben.

Das erfindungsgemässe Mahlwerk 1 kann in vorteilhafter Weise aus Metall, insbesondere Hartmetall, und/oder keramischen Werkstoffen ausgebildet sein, die sowohl die erforderliche Materialhärte als auch die für die Verwendung bei Lebens- bzw. Genussmitteln erforderlichen Bedingungen, insbesondere im Hinblick auf Lebensmittelechtheit, erfüllen.

Üblicherweise haben die Kaffeebohnen 3 eine Länge von etwa 7 bis 16 mm, eine Breite von etwa 7 bis 12 mm und eine Höhe von etwa 4 bis 7 mm. Es hat sich überraschend herausgestellt, dass folgende Eigenschaften eine besonders vorteilhafte Wirkung im Hinblick auf die Lösung der der Erfindung zugrunde liegenden Aufgabe (insbesondere im Hinblick auf eine schonende und feine sowie homogene Mahlung der Kaffeebohnen 3) bieten:

Bei einem erfindungsgemässen Mahlwerk 1, das als zweistufiges Kegelmahlwerk ausgebildet ist, sollte der Mahlkegel 11 im Bereich des Eintrittsspaltes 20 vorzugsweise im Wesentlichen 4 bis 7 Mahlschneiden 63 aufweisen, die jeweils eine Länge zwischen im Wesentlichen 1 und 25 mm haben sollten. Im Bereich des Austrittsspaltes 28 sollte der Mahlkegel 11 vorzugsweise im Wesentlichen 40 bis 60 Mahlschneiden 65 mit einer Länge von jeweils im Wesentlichen 1 bis 20 mm aufweisen. Die Gesamthöhe des Mahlkegels 11 sollte zwischen im Wesentlichen 18 bis 22 mm betragen. Die Höhe der Mahlschneiden 65 (d.h. die Erstreckung der Mahlschneiden 65 entlang der Drehachse R) im Bereich des Austrittsspaltes 28 sollte im Wesentlichen zwischen 4 und 12 mm liegen.

Der erfindungsgemässe Mahlring 15 sollte in vorteilhafter Weise im Bereich des Eintrittsspaltes 21 im Wesentlichen 16 bis 25 Mahlschneiden 93 mit einer jeweiligen Länge von im Wesentlichen 1 bis 20 mm aufweisen. Im Bereich des Aufstrittsspaltes 28 sollte der Mahlring 15 im Wesentlichen zwischen 40 und 60 Mahlschneiden 95 mit einer jeweiligen Länge von im Wesentlichen 1 bis 15 mm aufweisen. Die Gesamthöhe des Mahlrings 15 sollte im Wesentlichen zwischen 18 und 22 mm betragen. Die Höhe der Mahlschneiden 95 (d.h. die Erstreckung der Mahlschneiden 95 entlang der Drehachse R) im Bereich des Austrittsspaltes 28 sollte im Wesentlichen zwischen 4 und 12 mm liegen.

Aufgrund der der Auswahl des Neigungswinkels $\varphi$ einer Mahlfläche eines Zahns entsprechend der Relation 90° < $\varphi$ < 180° wird erreicht, dass jeder Mahlfuss seiner zugehörigen Mahlschneide bei Betrieb des erfindungsgemässen Mahlwerkes nachläuft (mit Bezug auf die jeweilige Schneidrichtung S1 bzw. S2). Hierdurch wird ein Schnittprozess bei den Kaffeebohnen durchgeführt, mit dem die der Erfindung zugrunde liegenden Vorteile in vorteilhafter Weise erzielt werden.

Die oben beschriebenen Mahlwerke können vorzugsweise derart ausgebildet sein, dass für den Neigungswinkel $\varphi$ einer Mahlfläche eines Zahns gilt: 90.5° < $\varphi$ < 105°. Letzteres gewährleistet einerseits, dass die Mahlwerke das jeweilige Mahlgut durch Schneiden zerkleinern. Weiterhin besteht in diesem Fall der Vorteil, dass Mahlflächen mit einem Neigungswinkel $\varphi$ mit 90.5° < $\varphi$ < 105° auf relativ einfache Weise und insbesondere kostengünstig hergestellt werden können, beispielsweise durch Bearbeiten eines Werkstücks mittels Fräsen oder Stossen. Weiterhin ist in diesem Fall gewährleistet, dass die Zähne der Mahlwerke eine hohe mechanische Festigkeit aufweisen und deshalb besonders resistent gegen Verschleiss sind, sodass die entsprechend ausgestatteten Mahlwerke eine lange Lebensdauer aufweisen.

Es sei darauf hingewiesen, dass die räumliche Anordnung der Mahlflächen der in den Figuren dargestellten Mahlflächen nicht nur durch eine Spezifikation des Neigungswinkels $\varphi$ bezüglich der jeweiligen Werkzeugbezugsebene E-I charakterisiert werden kann, sondern auch durch eine Angabe eines Winkels $\gamma$ zwischen der Mahlfläche und der jeweiligen Mahlschneideebene E-III, jeweils gemessen in der Arbeitsebene E-II am jeweiligen Punkt P (an welchem die Mahlschneideebene E-III sowohl die Werkzeugbezugsebene E-I als auch die Arbeitsebene E-II schneidet).

Zur Veranschaulichung dieses Sachverhalts ist in Fig. 7B ein Winkel $\gamma$ zwischen der an die Mahlschneide 63 angrenzenden Mahlfläche 64 des Mahlkegels 11 und der Mahlschneideebene E-III eingezeichnet. Der Winkel $\gamma$ und der entsprechende Neigungswinkel $\varphi$ der Mahlfläche 64 stehen in einem Zusammenhang gemäss der Gleichung

$$\varphi = \gamma + 90°.$$

Im Falle der Mahlfläche 64 haben die Winkel $\gamma$ und der entsprechende Neigungswinkel $\varphi$ jeweils dasselbe Vorzeichen. Unter der Voraussetzung, dass für den Neigungswinkel $\varphi$ die Beziehung 90° < $\varphi$ < 180° gilt, folgt 0° < $\gamma$ < 90°. Die Mahlschneide 63 bildet dementsprechend in Kombination mit der Mahlfläche 64 einen Teil eines Schneidwerkzeugs, welches bei einer Bewegung in der Mahlrichtung S1 eine spanende Bearbeitung eines Werkstücks mit einer ebenen Oberfläche, welche parallel zur Werkzeugbezugsebene E-I ausgerichtet ist, ermöglicht. Entsprechend einer üblichen Terminologie für spanende Bearbeitungsverfahren gemäss der Norm DIN 6581 entspricht der Winkel $\gamma$ einem "positiven" Spanwinkel eines Schneidwerkzeugs, dessen "Spanfläche" durch die Mahlfläche 64 des Mahlkegels 11 gebildet ist.

Weiterhin ist in Fig. 6E ein Winkel $\gamma$ zwischen der an eine Mahlschneide 93 angrenzenden Mahlfläche 94 des Mahlrings 15 und der Mahlschneideebene E-III eingezeichnet. Für den Winkel $\gamma$ gemäss Fig. 6E gilt (analog Winkel $\gamma$ gemäss Fig. 7B) $\varphi = \gamma + 90°$ und 0° < $\gamma$ < 90°. Dementsprechend bildet die Mahlschneide 93 in Kombination mit der Mahlfläche 94 einen Teil eines Schneidwerkzeugs, welches bei einer Bewegung in der Mahlrichtung S2 eine spanende Bearbeitung eines Werkstücks mit einer ebenen Oberfläche, welche parallel zur Werkzeugbezugsebene E-I ausgerichtet ist, ermöglicht. Entsprechend einer üblichen Terminologie für spanende Bearbeitungsverfahren gemäss der Norm DIN 6581 entspricht der Winkel $\gamma$ einem "positiven" Spanwinkel eines Schneidwerkzeugs, dessen "Spanfläche" durch die Mahlfläche 94 des Mahlrings 15 gebildet ist.

Entsprechend ist in Fig. 13B ein Winkel $\gamma$ zwischen der an eine Mahlschneide 63 angrenzenden Mahlfläche 64 der ersten Mahlscheibe 11' und der Mahlschneideebene E-III eingezeichnet. Für den Winkel $\gamma$ gemäss

Fig. 13B gilt (analog Winkel γ gemäss Fig. 7B) φ = γ + 90° und 0° < γ < 90°. Dementsprechend bildet die Mahlschneide 63 in Kombination mit der Mahlfläche 64 einen Teil eines Schneidwerkzeugs, welches bei einer Bewegung in der Mahlrichtung S1 eine spanende Bearbeitung eines Werkstücks mit einer ebenen Oberfläche, welche parallel zur Werkzeugbezugsebene E-I ausgerichtet ist, ermöglicht. Entsprechend einer üblichen Terminologie für spanende Bearbeitungsverfahren gemäss der Norm DIN 6581 entspricht der Winkel γ einem "positiven" Spanwinkel eines Schneidwerkzeugs, dessen "Spanfläche" durch die Mahlfläche 64 der ersten Mahlscheibe 11' gebildet ist.

Entsprechend ist in Fig. 14B ein Winkel γ zwischen der an eine Mahlschneide 93 angrenzenden Mahlfläche 94 der zweiten Mahlscheibe 15' und der Mahlschneideebene E-III eingezeichnet. Für den Winkel γ gemäss Fig. 14B gilt (analog Winkel γ gemäss Fig. 7B) φ = γ + 90° und 0° < γ < 90°. Dementsprechend bildet die Mahlschneide 93 in Kombination mit der Mahlfläche 94 einen Teil eines Schneidwerkzeugs, welches bei einer Bewegung in der Mahlrichtung S2 eine spanende Bearbeitung eines Werkstücks mit einer ebenen Oberfläche, welche parallel zur Werkzeugbezugsebene E-I ausgerichtet ist, ermöglicht. Entsprechend einer üblichen Terminologie für spanende Bearbeitungsverfahren gemäss der Norm DIN 6581 entspricht der Winkel γ einem "positiven" Spanwinkel eines Schneidwerkzeugs, dessen "Spanfläche" durch die Mahlfläche 94 der zweiten Mahlscheibe 15' gebildet ist.

Um einen Unterschied zu den erfindurigsgemässen Mahlwerken gemäss Fig. 4-14B zu verdeutlichen, ist auch im Falle des in Fig. 2 dargestellten, zum Stand der Technik gehörenden Mahlkegels ein Winkel γ zwischen der Mahlfläche 30 und der Mahlschneideebene E-III eingezeichnet. Im Fall von Fig. 2 haben der Winkel γ und der entsprechende Neigungswinkel φ verschiedene Vorzeichen, wobei ebenfalls gilt φ = 90°+ γ. Da allerdings für den Mahlkegel gemäss Fig. 2 der Neigungswinkel φ die Bedingung 0° < φ < 90° erfüllt, gilt für den Winkel γ gemäss Fig. 2: -90° < γ < 0°. Dementsprechend weist die Mahlfläche 30 des Mahlkegels gemäss Fig. 2 (Stand der Technik) bezüglich der Ebene E-III keinen "positiven" Spanwinkel auf.

## Patentansprüche

1. Mahlwerk (1), welches zum Mahlen von Kaffeebohnen (3) dient, aufweisend:

   - einen Mahlkegel (11), der eine Anzahl von voneinander beabstandeten, durch Mahlnuten (60, 66) voneinander separierten Zähnen (61, 67) besitzt, welche jeweils eine Mahlschneide (63, 65) und eine an die Mahlschneide (63, 65) angrenzende erste Mahlfläche (64, 69) aufweisen,
   - einen Mahlring (15), der eine Anzahl von voneinander beabstandeten, durch Mahlnuten (90, 96) voneinander separierten Zähnen (91, 97) besitzt, welche jeweils eine Mahlschneide (93, 95) und eine an die Mahlschneide (93, 95) angrenzende zweite Mahlfläche (94, 99) aufweisen,
   - wobei der Mahlkegel (11) und der Mahlring (15) koaxial entlang einer gemeinsame Drehachse (R) unter Ausbildung eines sich zwischen dem Mahlkegel (11) und Mahlring (15) erstreckenden Mahlspaltes (50) angeordnet sind,
   - wobei der Mahlkegel (11) und der Mahlring (15) relativ zueinander um die gemeinsame Drehachse (R) drehbar sind, sodass bei einer Drehung des Mahlkegels (11) relativ zum Mahlring (15) jede erste Mahlfläche (64, 69) des Mahlkegels (11) jeweils in eine Mahlrichtung (S1) relativ zum Mahlring (15) bewegt wird, um die zu mahlenden Kaffeebohnen (3) von einem Eintrittsspalt (20) des Mahlwerkes (1) in den Mahlnuten (60, 66, 90, 96) des Mahlkegels (11) und des Mahlrings (15) durch den Mahlspalt (50) zu einem unterhalb des Eintrittsspalts (20) angeordneten Austrittsspalt (28) zu transportieren und mittels der ersten Mahlflächen (64, 69) des Mahlkegels (11) zu zerkleinern, wobei jede erste Mahlfläche (64, 69) derart angeordnet ist, dass sie eine der Mahlnuten (60, 66) des Mahlkegels (11) an einer bezüglich der Mahlrichtung (S1) hinteren Seite der jeweiligen Mahlnut (60, 66) begrenzt,
   - wobei jede der ersten Mahlflächen (64, 69) des Mahlkegels (11) an einem beliebigen Punkt (P) an der jeweiligen ersten Mahlfläche (64, 69) einen Neigungswinkel φ bezüglich einer Werkzeugbezugsebene (E-I), gemessen an einer angenommenen Arbeitsebene (E-II) in der Mahlrichtung (S1) der jeweiligen ersten Mahlfläche (64, 69), aufweist,
   - wobei die Werkzeugbezugsebene (E-I) eine Ebene in dem beliebigen Punkt (P) ist, welche parallel zur Mahlrichtung (S1) und parallel zur gemeinsamen Drehachse (R) ausgebildet ist, und wobei
   - die angenommene Arbeitsebene (E-II) eine orthogonal zur Drehachse (R) und parallel zur Mahlrichtung (S1) ausgerichtete Ebene durch den beliebigen Punkt (P) ist, und **dadurch gekennzeichnet, dass** der Neigungswinkel φ zumindest einer der ersten Mahlflächen (64, 69) des Mahlkegels (11) folgende Bedingung erfüllt: 90° < φ < 180°

2. Mahlwerk (1), welches zum Mahlen von Kaffeebohnen (3) dient, aufweisend:

   - einen Mahlkegel (11), der eine Anzahl von voneinander beabstandeten, durch Mahlnuten (60, 66) voneinander separierten Zähnen (61, 67) besitzt, welche jeweils eine Mahlschneide (63, 65) und eine an die Mahlschneide (63, 65) angrenzende erste Mahlfläche (64, 69) aufweisen,

- einen Mahlring (15), der eine Anzahl von voneinander beabstandeten, durch Mahlnuten (90, 96) voneinander separierten Zähnen (91, 97) besitzt, welche jeweils eine Mahlschneide (93, 95) und eine an die Mahlschneide (93, 95) angrenzende zweite Mahlfläche (94, 99) aufweisen,

- wobei der Mahlkegel (11) und der Mahlring (15) koaxial entlang einer gemeinsame Drehachse (R) unter Ausbildung eines sich zwischen dem Mahlkegel (11) und dem Mahlring (15) erstreckenden Mahlspaltes (50) angeordnet sind,

- wobei Mahlkegel (11) und der Mahlring (15) relativ zueinander um die gemeinsame Drehachse (R) drehbar sind, sodass bei einer Drehung des Mahlrings (15) relativ zum Mahlkegel (11) jede zweite Mahlfläche (94, 99) des Mahlrings (15) jeweils in eine Mahlrichtung (S2) relativ zum Mahlkegel (11) bewegt wird, um die zu mahlenden Kaffeebohnen (3) von einem Eintrittsspalt (20) des Mahlwerkes (1) in den Mahlnuten (60, 66, 90, 96) des Mahlkegels (11) und des Mahlrings (15) durch den Mahlspalt (50) zu einem unterhalb des Eintrittsspalts angeordneten Austrittsspalt (28) zu transportieren und mittels der zweiten Mahlflächen (94, 99) des Mahlrings (15) zu zerkleinern, wobei jede zweite Mahlfläche (94, 99) derart angeordnet ist, dass sie eine der Mahlnuten (90, 96) des Mahlrings (15) an einer bezüglich der Mahlrichtung (S2) hinteren Seite der jeweiligen Mahlnut (90, 96) begrenzt,

- wobei jede der zweiten Mahlflächen (94, 99) des Mahlrings (15) an einem beliebigen Punkt (P) an der jeweiligen zweiten Mahlfläche (94, 99) einen Neigungswinkel $\varphi$ bezüglich einer Werkzeugbezugsebene (E-I), gemessen an einer angenommenen Arbeitsebene (E-II) in der Mahlrichtung (S2) der jeweiligen zweiten Mahlfläche (94, 99), aufweist,

- wobei die Werkzeugbezugsebene (E-I) eine Ebene in dem beliebigen Punkt (P) ist, welche parallel zur Mahlrichtung (S2) und parallel zur Drehachse (R) ausgebildet ist, und wobei

- die angenommene Arbeitsebene (E-II) eine orthogonal zur Drehachse (R) und parallel zur Mahlrichtung (S2) ausgerichtete Ebene durch den beliebigen Punkt (P) ist, und **dadurch gekennzeichnet, dass** der Neigungswinkel $\varphi$ zumindest einer der zweiten Mahlflächen (94, 99) des Mahlrings (15) folgende Bedingung erfüllt: $90° < \varphi < 180°$

3. Mahlwerk(1), welches zum Mahlen von Kaffeebohnen (3) dient, aufweisend:

- eine erste Mahlscheibe (11'), die eine Anzahl von voneinander beabstandeten, durch Mahlnuten (60, 66) voneinander separierten Zähnen (61, 67) besitzt, welche jeweils eine Mahlschneide (63, 65) und eine an die Mahlschneide (63, 65) angrenzende erste Mahlfläche (64, 69) aufweisen,

- eine zweite Mahlscheibe (15'), die eine Anzahl von voneinander beabstandeten, durch Mahlnuten (90, 96) voneinander separierten Zähnen (91, 97) besitzt, welche jeweils eine Mahlschneide (93, 95) und eine an die Mahlschneide (93, 95) angrenzende zweite Mahlfläche (94, 99) aufweisen,

- wobei die erste Mahlscheibe (11') und die zweite Mahlscheibe (15') koaxial entlang einer gemeinsamen Drehachse (R) unter Ausbildung eines sich zwischen der ersten Mahlscheibe (11') und der zweiten Mahlscheibe (15') erstreckenden Mahlspaltes (50) angeordnet sind und sich jeweils im Wesentlichen senkrecht zu der gemeinsamen Drehachse (R) erstrecken,

- wobei die erste Mahlscheibe (11') und die zweite Mahlscheibe (15') relativ zueinander um die gemeinsame Drehachse (R) drehbar sind, sodass bei einer Drehung der ersten Mahlscheibe (11') relativ zur zweiten Mahlscheibe (15') jede der ersten Mahlflächen (64) der ersten Mahlscheibe (11') jeweils in eine Mahlrichtung (S1) relativ zur zweiten Mahlscheibe (15') bewegt wird, um die zu mahlenden Kaffeebohnen (3) von einem Eintrittsspalt (20) des Mahlwerkes (1) in den Mahlnuten (60, 66, 90, 96) durch den Mahlspalt (50) zu einem Austrittsspalt (28) zu transportieren und mittels der ersten Mahlflächen (64, 69) der ersten Mahlscheibe (11') zu zerkleinern, wobei jede erste Mahlfläche (64, 69) der ersten Mahlscheibe (11') derart angeordnet ist, dass sie eine der Mahlnuten (60, 66) der ersten Mahlscheibe (11') an einer bezüglich der Mahlrichtung (S1) hinteren Seite der jeweiligen Mahlnut (60, 66) begrenzt,

- wobei jede erste Mahlfläche (64, 69) der ersten Mahlscheibe (11') an einem beliebigen Punkt (P) an der jeweiligen ersten Mahlfläche (64, 69) einen Neigungswinkel $\varphi$ bezüglich einer Werkzeugbezugsebene (E-I), gemessen an einer angenommenen Arbeitsebene (E-II) in der Mahlrichtung (S1) der jeweiligen ersten Mahlfläche (64, 69), aufweist,

- wobei die Werkzeugbezugsebene (E-I) eine Ebene in dem beliebigen Punkt (P) ist, welche parallel zur Mahlrichtung (M) und senkrecht zur Drehachse (R) ausgebildet ist, und wobei

- die angenommene Arbeitsebene (E-II) eine parallel zur Drehachse (R) und parallel zur Mahlrichtung (S1) ausgerichtete Ebene durch den beliebigen Punkt (P) ist, und
**dadurch gekennzeichnet, dass**
der Neigungswinkel φ zumindest einer der ersten Mahlflächen (64) der ersten Mahlscheibe (11') folgende Bedingung erfüllt: 90° < φ < 180°

4. Mahlwerk(1), welches zum Mahlen von Kaffeebohnen (3) dient, aufweisend:

- eine erste Mahlscheibe (11'), die eine Anzahl von voneinander beabstandeten, durch Mahlnuten (60, 66) voneinander separierten Zähnen (61, 67) besitzt, welche jeweils eine Mahlschneide (63, 65) und eine an die Mahlschneide (63, 65) angrenzende erste Mahlfläche (64) aufweisen,
- eine zweite Mahlscheibe (15'), die eine Anzahl von voneinander beabstandeten, durch Mahlnuten (90, 96) voneinander separierten Zähnen (91, 97) besitzt, welche jeweils eine Mahlschneide (93, 95) und eine an die Mahlschneide (93, 95) angrenzende zweite Mahlfläche (94, 99) aufweisen,
- wobei die erste Mahlscheibe (11') und die zweite Mahlscheibe (15') koaxial entlang einer gemeinsamen Drehachse (R) unter Ausbildung eines sich zwischen der ersten Mahlscheibe (11') und der zweiten Mahlscheibe (15') erstreckenden Mahlspaltes (50) angeordnet sind und sich jeweils im Wesentlichen senkrecht zu der gemeinsamen Drehachse (R) erstrecken,
- wobei die erste Mahlscheibe (11') und die zweite Mahlscheibe (15') relativ zueinander um die gemeinsame Drehachse (R) drehbar sind, sodass bei einer Drehung der zweiten Mahlscheibe (15') relativ zur ersten Mahlscheibe (11') jede der zweiten Mahlflächen (94, 99) der zweiten Mahlscheibe (15') jeweils in eine Mahlrichtung (S2) relativ zur ersten Mahlscheibe (11') bewegt wird, um die zu mahlenden Kaffeebohnen (3) von einem Eintrittsspalt (20) des Mahlwerkes (1) in den Mahlnuten (60, 66, 90, 96) durch den Mahlspalt (50) zu einem Austrittsspalt (28) zu transportieren und mittels der zweiten Mahlflächen (94, 99) der zweiten Mahlscheibe (15') zu zerkleinern, wobei jede zweite Mahlfläche (94, 99) der zweiten Mahlscheibe (15') derart angeordnet ist, dass sie eine der Mahlnuten (90, 96) der zweiten Mahlscheibe (15') an einer bezüglich der Mahlrichtung (S2) hinteren Seite der jeweiligen Mahlnut (90, 96) begrenzt,
- wobei jede der zweiten Mahlflächen (94, 99) der zweiten Mahlscheibe (15') an einem beliebigen Punkt (P) an der jeweiligen zweiten Mahlfläche (94, 99) einen Neigungswinkel φ bezüglich einer Werkzeugbezugsebene (E-I), gemessen an einer angenommenen Arbeitsebene (E-II) in der Mahlrichtung (S2) der jeweiligen zweiten Mahlfläche (94, 99), aufweist,
- wobei die Werkzeugbezugsebene (E-I) eine Ebene in dem beliebigen Punkt (P) ist, welche parallel zur Mahlrichtung (M) und senkrecht zur Drehachse (R) ausgebildet ist, und wobei
- die angenommene Arbeitsebene (E-II) eine parallel zur Drehachse (R) und parallel zur Mahlrichtung (S2) ausgerichtete Ebene durch den beliebigen Punkt (P) ist, und
**dadurch gekennzeichnet, dass**
der Neigungswinkel φ zumindest einer der zweiten Mahlflächen (94, 99) der zweiten Mahlscheibe (15') folgende Bedingung erfüllt: 90° < φ < 180°

5. Mahlwerk (1) nach einem der vorhergehenden Ansprüche, **dadurch gekennzeichnet, dass** die Anzahl der Zähne (61, 67, 91, 97) des Mahlkegels (11) und/oder des Mahlrings (15) und/oder der ersten Mahlscheibe (11') und/oder der zweiten Mahlscheibe (15') gleichmässig über ihren jeweiligen Umfang angeordnet ist.

6. Mahlwerk (1) nach einem der vorhergehenden Ansprüche, **dadurch gekennzeichnet, dass** der Mahlkegel (11) und/oder der Mahlring (15) und/oder die erste Mahlscheibe (11') und/oder die zweite Mahlscheibe (15') eine voneinander unterschiedliche Anzahl von Zähnen (61, 67, 91, 97) aufweist.

7. Mahlwerk (1) nach einem der vorhergehenden Ansprüche, **dadurch gekennzeichnet, dass** die Anzahl der Zähne (61, 67, 91, 97) des Mahlkegels (11) und/oder des Mahlrings (15) und/oder der ersten Mahlscheibe (11') und/oder der zweiten Mahlscheibe (15') vom Eintrittsspalt (20) des jeweiligen Mahlwerkes (1) zu dessen Austrittsspalt (28) hin zunimmt.

8. Mahlwerk (1) nach einem der vorhergehenden Ansprüche, **dadurch gekennzeichnet, dass** die Höhe der Zähne (61, 67, 91, 97) des Mahlkegels (11) und/oder des Mahlrings (15) und/oder der ersten Mahlscheibe (11') und/oder der zweiten Mahlscheibe (15') vom Eintrittsspalt (20) des jeweiligen Mahlwerkes (1) zu dessen Austrittsspalt (28) hin abnimmt.

9. Mahlwerk (1) nach einem der vorhergehenden Ansprüche, **dadurch gekennzeichnet, dass** die Neigungswinkels des Mahlkegels (11) und/oder des Mahlrings (15) und/oder der ersten Mahlscheibe (11') und/oder der zweiten Mahlscheibe (15') voneinander verschieden sind.

10. Mahlwerk (1) nach einem der vorhergehenden Ansprüche, **dadurch gekennzeichnet, dass** Zähne (61, 67, 91, 97) des Mahlkegels (11) und/oder des

2 984 973 A1

Mahlrings (15) und/oder der ersten Mahlscheibe (11') und/oder der zweiten Mahlscheibe (15') in Richtung der Achse (R) jeweils spiralförmig, insbesondere als logarithmische Spirale, angeordnet sind.

11. Kaffeemaschine mit einem Mahlwerk (1) nach einem der vorhergehenden Ansprüche.

Fig. 1
(Stand der Technik)

Fig. 2
(Stand der Technik)

Fig. 3
(Stand der Technik)

Fig. 4

Fig. 5

E-I

E-III

P

11

20

E-II

3

15

50

R

28

Fig. 6A

61

63

62

60

63

61

63

61

60

61

62

62

60

61

64

63

62

60

61

61

67

63

66

69

60

65

68

69

11

Fig. 6B

Fig. 6C

Fig. 6D

E-I

E-II

94

90

15

93

γ

P

M

93

3

R

φ

92

E-III

94

S2

91

Fig. 6E

11

P

E-III

61 63 64 60

E-I

60

E-II

63

R M

S1

61

64

60

60

62

62

62

67

66 69 68 65

Fig. 7A

Fig. 7B

Fig. 8A

C-C

Fig. 8B

Fig. 9A

Fig. 9B

Fig. 10A

Fig. 10B

1

R    100

28

15'

11'

50

70

Fig. 11

93 94 92 91  90  R  92 93  100

15'

11'

60   61   63   62 64    3    64    Fig. 12

Fig. 13A

B-B

Fig. 13B

Fig. 14A

C-C

Fig. 14B

**Europäisches Patentamt**
**European Patent Office**
**Office européen des brevets**

# EUROPÄISCHER RECHERCHENBERICHT

Nummer der Anmeldung

EP 14 40 5061

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 2 050 375 A1 (ELDOM ROTHRIST AG [CH]) 22. April 2009 (2009-04-22) * das ganze Dokument * ----- | 1-11 | INV. A47J42/00 A47J42/02 |
| A | EP 2 050 377 A1 (ELDOM ROTHRIST AG [CH]) 22. April 2009 (2009-04-22) * das ganze Dokument * ----- | 1-11 | |
| A | DE 195 14 794 A1 (GASS PETER [DE]) 24. Oktober 1996 (1996-10-24) * das ganze Dokument * ----- | 1-11 | |
| A | DE 849 600 C (SIEMENS AG) 15. September 1952 (1952-09-15) * das ganze Dokument * ----- | 1-11 | |

RECHERCHIERTE SACHGEBIETE (IPC)

A47J

Der vorliegende Recherchenbericht wurde für alle Patentansprüche erstellt

| Recherchenort | Abschlußdatum der Recherche | Prüfer |
|---|---|---|
| München | 12. Januar 2015 | Behammer, Frank |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 14 40 5061

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-01-2015

| Im Recherchenbericht angeführtes Patentdokument | | Datum der Veröffentlichung | Mitglied(er) der Patentfamilie | Datum der Veröffentlichung |
|---|---|---|---|---|
| EP 2050375 | A1 | 22-04-2009 | KEINE | |
| EP 2050377 | A1 | 22-04-2009 | KEINE | |
| DE 19514794 | A1 | 24-10-1996 | KEINE | |
| DE 849600 | C | 15-09-1952 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2050375 A1
- DE 19514794 A1
- DE 19638824 A1
- DE 849600
- DE 3803619 C2
- WO 19638824 A1